# EUROPEAN PATENT APPLICATION

(11) **EP 4 379 168 A1**
(43) Date of publication of application: **05.06.2024**
(21) Application number: 23189898.2
(22) Date of filing: 05.08.2023
(51) Int. Cl.: E04F 21/18, B65G 7/12, E01C 19/52, E04G 21/16, E04F 21/24

(54) **IMPROVED METHOD AND DEVICES FOR FITTING LARGE FLOOR TILES**

(30) Priority: 07.08.2022 NL 2032697
(71) Applicant: De Leest, Petrus, 5531 BN Bladel (NL)
(72) Inventor: De Leest, Petrus, 5531 BN Bladel (NL)
(74) Representative: Pollard, Peter Julian

(57) **Abstract**

The use of increasingly large tiles creates many handling problems - safe transportation becomes difficult due to their size and weight. Manual installation of these large tiles requires the use of two or more craftsmen, which increases the cost and complexity of installation. A tile fitter is provided, comprising a chassis with a first and second end; at least two scoring wheels, attached proximate the first end; one or more spacers, proximate the first end of the chassis, to support the tile-to-be-installed at two or more positions; one or more tile openings proximate the second end at least as large as the thickness of the tile-to-be-installed; and at least one moving wheel, attached proximate the second end; and wherein the tile-to-be-installed includes a first portion extending from the one or more tile openings to the one or more spacers.

Maximum use is made of balance during laying by tilts and weight shifts. The apparent weight of the tile hanging approximately at equilibrium becomes significantly lower for the tile fitter driving through the adhesive bed without significantly disturbing the adhesive bed.

## Description

### TECHNICAL FIELD

This disclosure relates to an improved method and devices for installing tiles, particularly extra-large (XL) floor tiles. In particular, it relates to a tile fitter for manipulating tiles during installation. Specifically, it relates to a manually operated tile fitting device for manipulating tiles horizontally. It further relates to a tile transporter for moving tiles prior to installation. In particular, it relates to a manually operated tile transporter for vertically manipulating tiles prior to installation. It also relates to a tile fitting kit, comprising a tile fitter and a tile transporter.

### STATE OF THE ART

Different types of floor tiles are available for home, retail and industrial use, usually made of ceramic or stone. They are usually rectangular and are usually installed manually, one at a time, by a skilled craftsman, such as a tiler. There is a preference for increasingly larger floor tiles in home and retail because these tiles make the space feel more spacious. They are also more suitable for tiling large spaces because they reduce the number of installation operations. In addition, the reduced number of joints means easier maintenance and cleaning, which is especially beneficial for retail and industrial use. However, the use of increasingly large tiles creates many practical handling problems - safely transporting them becomes difficult due to their size and weight. In addition, many countries have strict laws on the size, weight and length of work a single person can handle to minimize the risks of muscle pain, back problems, knee problems and fatigue. So manual installation of these large tiles requires the use of more craftsmen, which increases the cost and complexity of installation.

Most proposed solutions to these problems require the use of tile fitting machines or cranes to do the heavy lifting and positioning of tiles. For example, US patent US 9,074,381 B1 describes a robotic tile fitting machine with a suction cup connected to a vacuum source capable of picking up, positioning and releasing a new tile relative to a first laid tile and a second laid tile, wherein the first and second laid tiles are aligned perpendicularly. For example, US patent application US 2020/0024853 A1 describes a system for installing objects on a surface with a robotic arm coupled to an end effector, wherein the end effector is arranged for coupling to an object to be placed on the surface. However, all of these proposed solutions rely on vacuum suction to adhere to the top surface of the tile, making them sensitive to top surface properties such as flatness and porosity.

### GENERAL STATEMENTS

According to an aspect, a tile fitter for manipulating a tile-to-be-installed during installation is described, wherein the tile-to-be-installed has a lower surface suitable for remaining in contact with a surface to be covered, the tile fitter comprising: a chassis extending along a longitudinal axis from a first end to a second end, and further extending along a transverse axis; at least two scoring wheels, rotatably attached to each transverse side of the chassis proximate the first end of the chassis; one or more spacers attached to a first surface of the chassis, proximate the first end of the chassis, arranged at two or more positions to support the lower surface of the tile-to-be-installed; one or more tile openings, attached to a first surface of the chassis, proximate the second end of the chassis, wherein the one or more tile openings are at least as large as the thickness of the tile-to-be-installed and at least one moving wheel, rotatably attached to a second surface of the chassis, proximate the second end of the chassis; wherein the tiling device is arranged to receive the tile-to-be-installed such that an edge of the tile-to-be-installed is received by the one or more tiling openings and the lower surface of the tile-to-be-installed is supported by the one or more spacers; and wherein the tile-to-be-installed includes a first portion extending from the one or more tiling openings to the one or more spacers.

This allows heavy and bulky floor tiles or tiles to be installed by one person while reducing the risk of serious injury. This is also particularly advantageous for selfemployed craftsmen and tile setters because they can lay large format tiles without assistance. Moreover, no substantial use is made of properties of the upper (or outer) surface of the tiles during installation. Matt other words, any optional textures, patterns, porosity, non-flat surface geometry, painted or decorated areas on an outer surface have no substantial effect on tile installation. Moreover, the tile fitter can be operated by hand, eliminating the need for a suitable power supply during tile installation. Moreover, the tile fitter can be adapted to tiles of almost any size, weight, stiffness and flexibility. Maximum use is made of balance during laying by tilts and weight shifts. The apparent weight of the tile hanging approximately at equilibrium becomes significantly lower for the tile fitter driving through the adhesive bed without significantly disturbing the adhesive bed.

According to an aspect, a tile transporter for moving a tile is described, wherein the tile to be moved has a lower surface, the tile transporter comprising: a chassis extending along a longitudinal axis from a first end to a second end, and further extending along a transverse axis; at least two moving wheels, rotatably attached to the chassis proximate the first end of the chassis; one or more supports, attached to the chassis, proximate the first end of the chassis and proximate the at least two moving wheels, wherein the one or more supports are arranged at two or more positions to hold the transporter in a roughly vertical orientation relative to a ground surface; a one or more tile openings, placed on a first surface of the chassis, proximate the first end of the chassis, wherein the one or more tile openings are at least as large as the thickness of the tile-to-be-installed one or more moving wheels, rotatably attached to the first surface of the chassis proximate the second end, wherein the one or more moving wheels are arranged to support at least a portion of the tile to be moved; wherein the tile transporter is arranged to receive the tile to be moved such that an edge of the tile to be moved is accommodated by the one or more tile openings and the lower surface of the tile to be moved is supported by the one or more moving wheels; wherein the one or more supports are arranged to maintain the transporter in an approximately vertical orientation between displacements; and wherein the one or more supports are arranged to rotate the transporter about the transverse axis such that the weight of the transporter and the tile to be moved is transferred from the one or more supports to the large moving wheels during movement..

Moving a vertically oriented large tile reduces the risk that the tile transporter and tile will not fit through a standard doorway. Therefore, it may be advantageous to provide a tile transporter that can cooperate with the tile fitter as described herein. With a small amount of rotation by the user, the weight of the load is transferred while moving from the one or more supports to the large moving wheels. This makes it easier for a large tile to be moved by one person over greater distances.

According to an aspect, a tile fitting kit is described, comprising a tile fitter as described herein, and a tile transporter as described herein.

It may be advantageous to provide a tile fitting kit comprising a tile fitter as described herein, and a tile transporter as described herein. It may be further advantageous to arrange the tile fitter and/or tile transporter to connect with each other for transportation.

Further benefits and features flow from the conclusions. Further benefits and features flow from the figures, including:
FIG. 1 through FIG. 2, showing schematic side views during preparation of a tile, and moving a tile to a transporter;
FIG. 3 to FIG. 6, showing a schematic side view during moving a tile to a suitable position using a transporter, and transferring a tile from a transporter to a tile fitter;
FIG. 7 through FIG. 9, showing schematic side views during installation of a tile using a tile fitter;
FIG. 10 through FIG. 12, showing schematic examples of a tile fitter;
FIG. 13, showing schematic examples of cross sections through a glue scoring wheel;
FIG. 14 through FIG. 15, showing schematic examples of a transporter;
FIG. 16, which shows a schematic example of a tile fitter and a tile transporter interlocking for transport;
FIG. 17, which shows a schematic example of a tile laying machine and a tile transporter connected together for transport;
FIG. 18 and FIG. 19 showing schematically examples of a second embodiment of a transporter with support wheels;
FIG. 20 showing schematically an example of a second embodiment of a tile laying machine with spacer wheels; and
FIG. 21 showing schematically an example of moving a tile lying on a tile fitter.

### DETAILED DESCRIPTION WITH DRAWINGS

A first axis 910, a second axis 920 and a third axis 930 are shown in the figures to make it easier to relate the different views and different parts. The first axis 910 is perpendicular to the second axis 920 and the third axis 930 is perpendicular to both the first axis 910 and the second axis 920. It is assumed that the first axis 910 is in a Y direction, the second axis 920 is in an X direction, and the third axis 930 is in a Z direction. As shown, the Y axis 910 and X axis 920 in use are substantially horizontal, horizontal or approximately horizontal. In general, the X-axis 920 and Y-axis 910 can be interchanged. As shown, the Z-axis 930 in use is substantially vertical, vertical or approximately vertical. To clarify the description of the various components, relative terms such as top, side, bottom and bottom have been used to conform to this convention. These conventions should not be considered restrictive - the devices described in this application can be arranged to operate at various deviations from these conventional orientations and nominal coordinate axes.

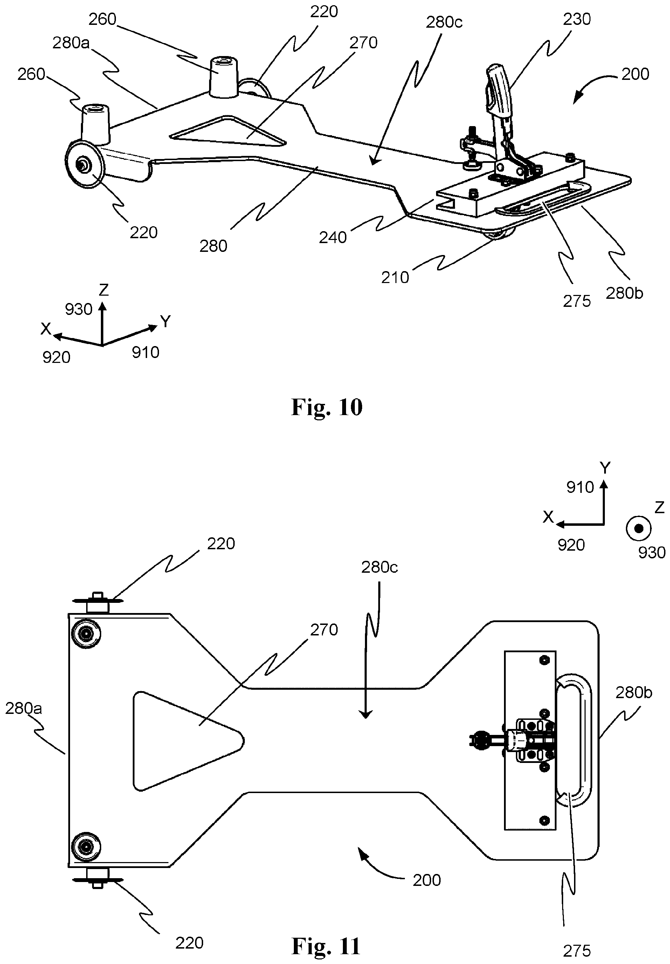

FIG. 10 through FIG. 12 show schematic examples of a tile fitter 200 (or tile installation device) suitable for manipulating a tile (not shown in FIG. 10 through FIG. 12) during installation. It is advantageous if the tile fitter 200 is suitable for manipulating a tile horizontally. It is advantageous if the tile fitter 200 is suitable for manipulating an XL tile (also called XL slab). It is advantageous if the tile fitter 200 is arranged to be manually operated. This description also uses the abbreviated term fitter 200 instead of tile fitter 200.

The tile fitter 200 is suitable for use by, for example, an assistant, a hobbyist, a do-it-yourselfer, a laborer, a craftsman or a tiler. A tiler is a craftsman who covers walls, ceilings or floors by laying units of substantial material, such as stone, brick, slab or tile. The tile fitter 200 can be used to install any tile suitable for covering a floor (also called a subfloor or ground). A tile may include, for example, one or more substances selected from the group comprising: a ceramic, a glass, a stone, a plastic, a polymer, a vinyl, a metal, a non-metal, a cement or a combination thereof. A tile can be installed in a building, in a partially sheltered environment or even outdoors.

The tile-to-be-installed has a first surface suitable for remaining in contact with a surface to be covered, such as a floor. Optionally, the first surface may be suitable for adhesion to a surface to be covered. The first surface is described herein as an under surface or an adhesion surface of the tile-to-be-installed.

The tile-to-be-installed also has a second surface. In the case of a floor tile, the second surface is described herein as a top surface of the tile-to-be-installed.

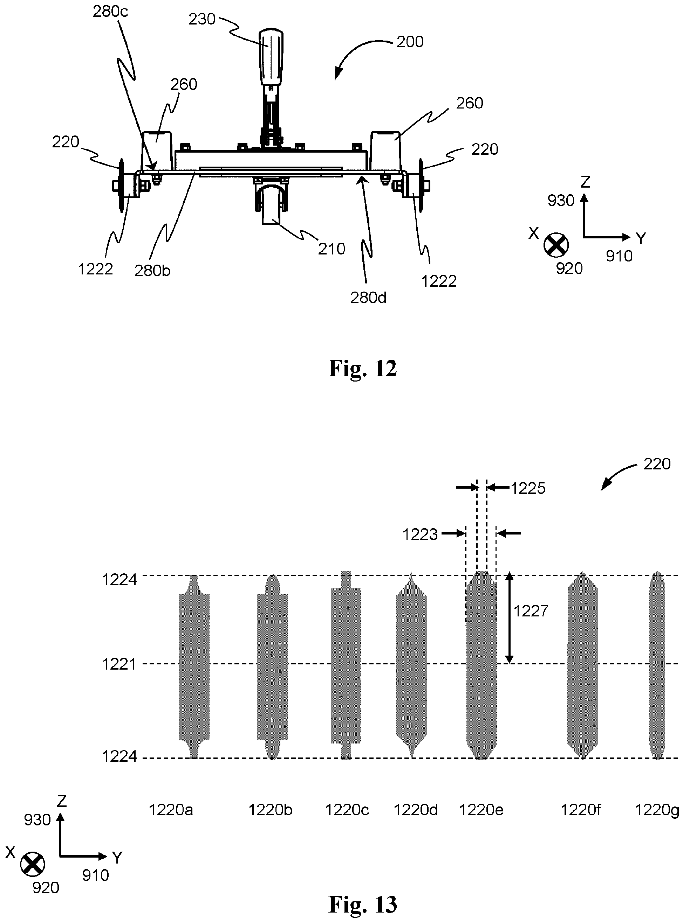

FIG. 11 shows a top view of the tile fitter 200. In other words, the tile fitter 200 is viewed from above in a negative Z-axis 930 direction. FIG. 12 shows a transverse view of the negative X 920 end of the tile fitter 200. In other words, the tile fitter 200 is viewed from the side in a positive X axis 920 direction.

FIG. 10 shows a perspective view of the tile fitter 200. The X axis 920 is shown from left to right, the Y axis 910 is shown in the figure, and the Z axis 930 is shown from bottom to top.

As shown, the tile fitting device 200 includes a chassis 280 extending in a plane that includes the X axis 920 and the Y axis 910. The chassis 280 extends longitudinally along the X-axis 920 (longitudinal axis) from a first end 280a to a second end 280b. Further, the chassis 280 extends in the transverse direction along the Y axis 910 (transverse axis). In this example, the longitudinal dimension 920 is larger than the transverse dimension 910.

The chassis 280 is shown in an approximately horizontal position, viewed from slightly above the upper surface of the chassis 280. The lower surface of the chassis 280 is not shown in FIG. 10.

The tile fitter 200 further includes at least two scoring wheels 220, rotatably attached to each transverse side of the chassis 280 proximate the first end 280a of the chassis 280. The scoring wheels 220 are arranged to rotate and to support both the tile fitter 200 and the tile-to-be-installed 500, while the tile fitter 200 is moved along the ground. The scoring wheels 220 are further arranged to score an adhesive bed of the tile-to-be-installed - in other words, the scoring wheels 220 are arranged to reduce disruption and/or distortion of the adhesive bed during tile installation.

The tile fitting device 200 further includes at least two spacers 260 attached to a first surface 280c of the chassis 280, proximate the at least two scoring wheels 280. The first surface 280c of the chassis 280 is arranged to point upward (an upper surface) during the final steps of fitting the tile 500. The spacers 260 are arranged to support the adhesion surface (lower surface) of the tile 500, so that space is provided between the scoring wheels 220 and the adhesion surface of the tile-to-be-installed. This allows the at least two scoring wheels 220 to rotate freely (or freely enough). The spacers 260 are further arranged to form a tile tilt angle (or tile slope), which facilitates the removal of the tile fitter 200 during tile installation. A person skilled in the art understands that the at least two spacers 260 may be integrated into one or more spacers, wherein the one or more spacers 260 are arranged at two or more positions to support the adhesion surface (lower surface) of the tile-to-be-installed 500.

The tile fitting device 200 further includes a recess attached to the first surface 280c (the top surface) of the chassis 280, proximate the second end 280b of the chassis 280. In other words, the recess is attached to the end 280b without the at least two scoring wheels 280. The recess has one or more tile openings 240 that are at least as large as the thickness of the tile to be installed. A person skilled in the art understands that one or more suitable tile openings 240 may be arranged using an edge, a recess, a niche, a notch, a cutout, a hollow, a slot, a cavity, a groove, a slot, or a combination thereof.

The tile support 200 is arranged to receive a tile, such that an edge of the tile is received by the one or more tile openings 240 and at least a portion of the tile is supported by the spacers 260.

Optionally, the one or more tile openings 240 may be at least partially formed by the first surface 280c of the chassis 280 of the tile fitter 200.

Optionally, the chassis 280 may be provided with one or more chassis protective parts (not shown). For example, one or more horizontal chassis protective pieces (not shown) may be provided on the chassis 280 opposite and/or adjacent to the one or more tile openings 240. Optionally, the one or more chassis protective parts (not shown) may be arranged to reduce the risk of damage to the tile by the chassis 280. Optionally, the one or more chassis protective parts (not shown) may be arranged to reduce the risk of damage to the chassis 280 by the tile. The one or more chassis protective parts (not shown) may include a resilient and/or soft material, for example, natural fabric, synthetic fabric, textile, rubber, felt, foam, plastic, polymer, PTFE, bioplastic, wood, cardboard, aluminum, copper, bronze, steel, spring steel, or any combination thereof.

Optionally, the one or more horizontal chassis-protective parts (not shown) can be arranged to at least partially form the one or more tile openings 240.

As shown, the scoring wheels 220 are arranged at the positive X 920 end (first end 280a) of the chassis 280 and the one or more tile openings 240 are arranged at the negative X 920 end (second end 280b) of the chassis 280.

In the illustrated example, the tile fitter 200 further includes an optional clamp 230 arranged to hold the tile-to-be-installed in place by applying a force to the tile in the direction of the top surface of the chassis 280, thereby pressing the adhesion surface of the tile against the top surfaces of the spacers 260 . In this example, the optional clamp 230 is positioned at the negative X 920 end of the chassis 280. In this example, the optional clamp 230 is positioned proximate the one or more tile openings 240. Alternatively, more than one clamp 230 may be used.

In the illustrated example, the chassis 280 further includes an optional access opening 270 arranged to receive a coupling piece from a tile transporter (not shown), which allows the tile fixture 200 to be coupled to the tile transporter (not shown). This can be advantageous while transporting a tile fitting kit (not shown) comprising a tile fitter 200 and a tile transporter (not shown). In the example shown, the access opening 270 has a triangular shape. The access opening 270 may have any suitable shape, for example, square, rectangle, polygon, circle, oval, ellipse, stadium or any combination thereof. Optionally, the corners may be approximately straight or at least partially rounded.

In the illustrated example, the chassis 280 further includes an optional grip opening 275 arranged to allow the user to manipulate the tile fitter 200 during installation by, for example, moving the tile fitter 200 in both negative and positive directions along the X-axis 920. The optional grip opening 275 may optionally be arranged to allow movement along the Y axis 910 in both negative and positive directions by the user applying a force along the Y axis 910 during movement along the X axis 920. The grip opening 275 may optionally be arranged to allow the negative X 920 end of the chassis 280 to be lifted along the positive Z axis 930 away from the adhesive bed. In the illustrated example, a grip is created by an opening 275 - alternatively, a handle or knob may be used, attached to the chassis 280. Alternatively, more than one grip may be provided. In the illustrated example, the grip opening 275 has a stadium shape. The grip opening 275 may have any suitable shape, for example, triangle, square, rectangle, polygon, circle, oval, ellipse, or any combination thereof. Optionally, the corners may be approximately straight or at least partially rounded.

The tile fitter 200 further includes at least one moving wheel 210, rotatably attached to the lower surface 280d (second surface) of the chassis 280, proximate the second end 280b of the chassis 280. The moving wheel 210 is arranged to rotate and support both the tile fitter 200 and the tile to be installed, while moving the tile fitter 200 along the ground.

The moving wheel 210 may have a fixed orientation. Alternatively, the moving wheel 210 may be rotatably arranged.

The at least one moving wheel 210 is arranged for moving. For example, the average transverse thickness proximate the wheel edge may be 15 mm or greater, or may be 20 mm or greater, or may be 25 mm or greater, or may be 30 mm or greater. The average radius of this moving wheel 210 and the placement of the moving wheel 210 determine, in part, the clearance height of the tile fitter during installation. For example, the average radius of the moving wheel 210 may be 50 mm or less, or 25 mm or less, or 10 mm or less.

The underlying surface (or floor) to which the tiles are applied can vary, but a hard surface is often used for retail and industrial buildings, such as a concrete floor. For residential buildings, concrete is also commonly used, or some type of wooden planks such as composite boards or plywood. Usually the underlying surface is poured or constructed so that it is essentially flat and level. The surface can also be described as hard if it is sufficiently compressive and tensile to withstand the pressure of the tile fitter 200, without permanent deformation or fracture that would interfere with the fitting of the tile 500.

The tile fitter 200 can be arranged to fit tiles of any size, weight, rigidity and flexibility. However, it is most advantageous for a tile 500 with a large size (L), for example, with area of 0.5 m² or more. In practice, these are typically tiles 500 with at least one dimension of 0.75 m or larger.

The European Union of National Tile Installer Associations uses the following definitions:
XL: area of 1.0 m² or more. In practice, these are typically tiles 500 with at least one dimension of 1.0 m or larger.
XXL: area of 3.0 m² or more. In practice, these are typically tiles 500 with at least one dimension of 2.5 meters or larger.

Large-size tiles, for example, have a thickness between 3 mm and 6 mm for thinner tiles, and 6 mm and 15 mm for thicker tiles.

The following are examples of L, XL and XXL tiles 500 currently available:

| Dimensions (m × m) | Surface area (square meters) | Thickness (millimeters) | Typical weight (kg) |
|---|---|---|---|
| 0.4 × 0.8 | 0.32 | 6-12 | 4 - 12.5 |
| 0.6 × 1.2 | 0.72 | 6 - 12 | 10 - 20 |
| 0.75 × 0.75 | 0.5625 | 6 - 12 | 7.5 - 14 |
| 0.8 × 0.8 | 0.64 | 6 - 12 | 9 - 20 |
| 0.9 × 0.9 | 0.81 | 6 - 12 | 11 - 19 |
| 1.0 × 1.0 | 1.00 | 6 - 12 | 14 - 24 |
| 1.2 × 1.2 | 1.44 | 6 - 12 | 20 - 35 |
| 1.2 × 2.6 | 3.12 | 6 - 12 | 52 - 75 |
| 1.2 × 2.8 | 3.36 | 6 - 12 | 45 - 80 |
| 1.2 × 3.2 | 3.84 | 6 - 12 | 54 - 90 |

Thus, it may be advantageous to arrange the tile fitter 200 to manipulate the tile-to-be-installed 500 with at least one dimension of 0.75 meters or greater, or with at least one dimension of 1.00 meters or greater, or with at least one dimension of 1.2 meters or

greater. Thus, it may also be advantageous to equip the tile transporter 300 to manipulate the tile-to-be-installed 500 with at least one dimension of 0.75 meters or greater, or with at least one dimension of 1.00 meters or greater, or with at least one dimension of 1.2 meters or greater.

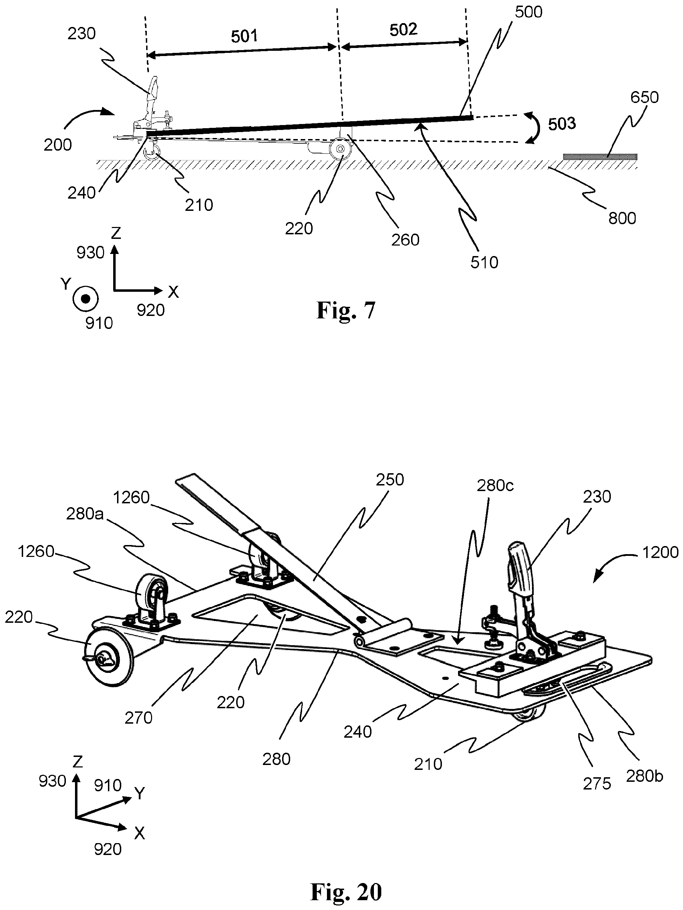

FIG. 7 through FIG. 9 show schematic side views during installation of a tile 500 using a tile fitter 200.

FIG. 7 shows a longitudinal view of the positive Y 910 side of the tile fitter 200. In other words, the tile fitter 200 is viewed from the side in a negative Y axis 910 direction. As shown, a tile 500 has already been received by the tile fitter 200. During installation, the tile 500 is applied to an underlying surface 800. At the time of installation as shown in FIG. 7, at least the following steps a1 through a3 have been performed:
a1) the tile fitter 200 has received the tile-to-be-installed 500, wherein one edge of the tile 500 is accommodated by the one or more tile openings 240 and the remaining portion of the tile is supported by the spacers 260. The adhesion surface 510 (lower surface 510) of the tile 500 is oriented to the upper surface of the chassis 280. Optionally, the upper surface of the chassis 280 may be further arranged to receive the tile-to-be-installed 500.
a2) an adhesive bed 650 is applied to the underlying surface 800 where the tile 500 is to be installed. Optionally, the adhesive bed 650 may be applied using the flat side and/or comb side of an adhesive comb. Optionally, the adhesive bed 650 may be applied using a glue gun or glue gun. Any suitable adhesive can be used, such as 720 Unicol from Forbo Eurocol Nederland B.V or Q6 Schönox from Sika Deutschland GmbH, with sufficient filling capacity for layer thicknesses of, for example, 5 mm to 15 mm, and a final strength and moisture and frost resistance of, for example, C2TE according to NEN EN 12004.
a3) the tile fitter 200 with the tile-to-be-installed 500 is moved over the underlying surface 800 to a position proximate the installation location. Optionally, to a position directly in front of the installation location. Optionally, to a position at least 100 millimeters away from the edge of the adhesive bed 650. Movement of the tile fitter 200 was made possible by the support of at least two scoring wheels 220 and at least one small moving wheel 210.

Optionally, one or more of the following steps b 1 through b4 may have already been performed:
b1) the adhesion surface 510 of the tile-to-be-installed 500 may be provided with adhesive, as described above, before the tile 500 is received by the tile fitter 200.
Optionally, the adhesive may be applied using the flat side of a glue comb or trowel (buttering). Optionally, the adhesive bed may be applied using a glue gun or glue gun.
b2) the underlying surface 800 may have been cleaned to ensure that it is sufficiently dry and sufficiently free of grease, dirt and dust. For example, according to DIN 18 352.
b3) the underlying surface 800 can be leveled to ensure that it is sufficiently flat. For example, 1-20 mm of a leveling compound, such as 990 Europlan Direct, can be used. b4) the tile-to-be-installed 500 may be clamped to the tile fitter 200 using the optional clamp 230.

There are several methods of applying adhesive to a surface, such as applying raised areas of adhesive with space between them. The raised areas can be in the form of dots or ridges separated by space. The raised areas can be applied in a random manner, or in a regular manner, or a combination of random manner and regular manner. Glue beads are raised areas of glue on a surface, separated by glue grooves that are areas of little or no glue. Optionally, glue beads can be applied in approximately the same direction to form glue rows.

Preferably, a buttering/floating (double bonding) method is used to apply the adhesive, wherein a suitable adhesive is applied to the adhesion surface 510 of the tile 500 with the flat side of a glue comb or trowel (buttering). Further in a buttering/floating method, a suitable adhesive is applied as an adhesive bed 650 to the underlying surface 800 with the comb side of a glue comb to create adhesive beads (or adhesive ribs) on the underlying surface 800 (floating). For example, a glue comb with a 15 mm toothing that applies glue beads with a cross section of about 15 mm width separated by glue grooves of about 15 mm width. Optionally, the glue comb can have straight and/or round teeth. The shape of the adhesive beads, and their height relative to the surface, depends, for example, on the shape of the glue comb teeth and the shape of the spaces between the glue comb teeth. Optionally, the glue beads may be applied in glue rows approximately in the direction of travel of the at least two scoring wheels 220 to reduce the risk of disruption and/or deformation of the adhesive bed 650 during installation.

Optionally, an average distance between adhesive beads may be greater than the crosssectional dimensions of the at least two scoring wheels 220 to reduce the risk of disturbance and/or deformation of the adhesive bed 650 during installation.

Double bonding reduces the risk that the adhesive contact area of the applied tile is too low - for example, an adhesive contact area of at least 80% is preferred, and for exterior applications an adhesive contact area close to 100% is preferred. Double bonding may also be required as a condition of warranty.

FIG. 7 further shows the tile-to-be-installed 500 extending along the positive X direction 920 beyond the length (the dimension along the longitudinal axis 920) of the tile fitter 200. In other words, the tile-to-be-installed 500 includes a first portion 501 and a second portion 502, wherein the second portion 502 includes a protruding portion of the tile 500. The one or more tile openings 240 receives an edge of the first portion 501. The first portion 501 extends along the X-axis 920 from the one or more tile openings 240 to the spacers 260. The second portion 502 extends from the spacers 260 along the X-axis 920. In the position shown in FIG. 7, the second portion 502 extends toward the adhesive bed 650.

The dimension of the first portion 501 along the X-axis 920 is preferably larger than the second portion 502 along the X-axis 920 to reduce the risk of the tile fitter 200 tilting unexpectedly during movements. Conversely, the protruding portion of the second portion 502 is preferably large enough to help when the user positions (or tilts) the tile fitter 200 during installation. A person skilled in the art understands that a balance may be affected by the size of the first portion 501, the size of the second portion 502, the positions of the components of the tile fitter 200, or any combination thereof. A skilled artisan understands that an equilibrium may also be affected by a mass distribution, for example, of the tile-to-be-installed 500, of the tile fitter 200, of components of the tile fitter 200, or any combination thereof.

The dimension along the X axis 920 of the first portion 501 may be 50% or more of the dimension of the tile 500 along the X axis 920, for example, between 50% and 70%. The dimension along the X-axis 920 of the first portion 501 may be, for example, between 55% and 65% of the dimension of the tile 500 along the X-axis 920. For example, the dimension along the X-axis 920 of the first portion 501 may be about 60% of the dimension of the tile 500 along the X-axis 920.

The dimension along the X axis 920 of the second portion 502 may be less than 50% of the dimension of the tile 500 along the X axis 920, for example, between 30% and 50%. The dimension along the X-axis 920 of the second portion 502 may be, for example, between 35% and 45% of the dimension of the tile 500 along the X-axis 920. For example, the dimension along the X-axis 920 of the second portion 502 may be 40% of the dimension of the tile 500 along the X-axis 920.

It may be advantageous to set the dimension of the second portion 502 along the X-axis 920 as long as possible to reduce the risk that the small moving wheel 210 of the tile fitter 200 will interfere with or deform the adhesive bed 650 during the installation of the tile 500.

The spacers 260 are further arranged to provide a tile tilt angle 503 (or tile slope), which facilitates the removal of the tile fitter 200 during tile installation. The tile tilt angle 503 is an average angle between the top surface of the top surface of the chassis of the tile fitter 200, and the adhesion surface 510 of the tile-to-be-installed 500. For example, the tile tilt angle 503 may be between 5 and 20 degrees. The tile tilt angle 503 may be, for example, between 5 and 10 degrees. The tile tilt angle 503 may be, for example, about 5 degrees.

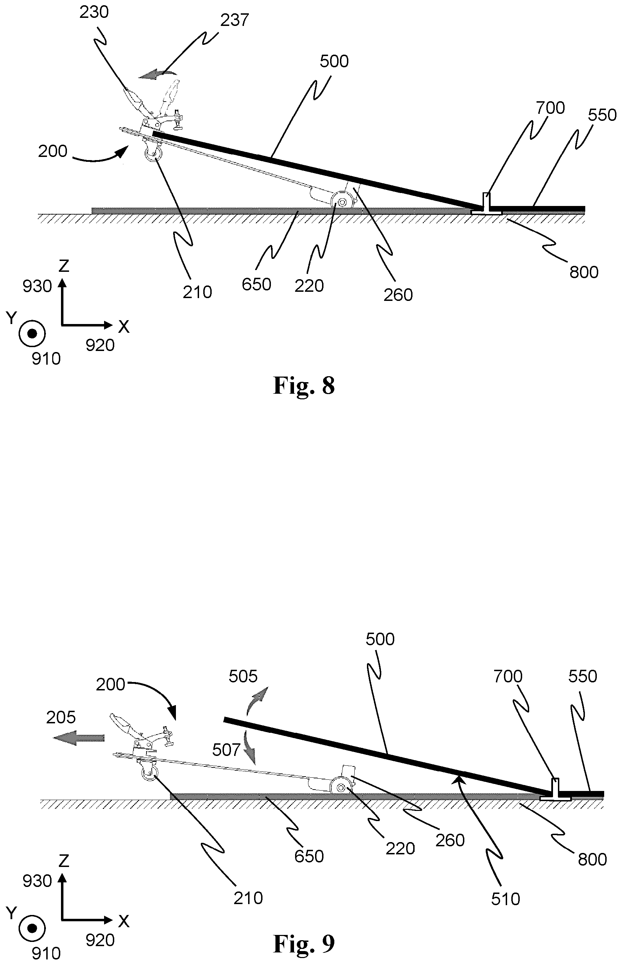

FIG. 8 shows a longitudinal view of the positive Y 910 side of the tile fitter 200. In other words, the tile fitter 200 is viewed from the side in a negative Y axis 910 direction. At the time of installation as shown in FIG. 8, at least the following steps c1 through c4 have already been performed relative to the position shown in FIG. 7:
c1) the tile fitter 200 with the tile-to-be-installed 500 is moved in positive direction along the X axis 920 in the direction of an already fitted tile 550.
(c2) the scoring wheels 220 are displaced in the adhesive bed 650. Preferably, the tile fitter 200 is arranged so that the small moving wheel 210 does not significantly disturb or deform the adhesive bed 650.
(c3) tilting (or rotating) the tile fitter 200, placing the positive X 920 end of the tile-to-be-installed 500 at the desired position in the adhesive bed 650. As shown in FIG. 8, this may be, for example, against one or more leveling clips 700. If no leveling clips 700 are used, this may also be, for example, against an end of a previously fitted tile 550. Optionally, a gap may be provided between adjacent tiles 500, 550 to reduce the risk of damage due to thermal expansion after installation is complete. Tilting (or rotating) can be performed by lifting the negative X 920 end of the tile fitter 200 by the user.
c4) if the tile fitter 200 includes an optional clamp 230, the clamp 230 must be released 237 to complete the installation of the tile 500.

Optionally, one or more of the following steps d1 through d4 may have already been performed relative to the position shown in FIG. 7:
d1) applying one or more leveling clips 700 to previously fitted tiles 550 to reduce the risk that neighboring tiles 500, 550 are laid at different heights.
d2) moving the tile fitter 200 along the X axis 920 in both negative and positive directions to ensure that the edge of the tile 500 at the positive X 920 end is correctly positioned relative to a reference position or a previously fitted tile 550.
d3) moving the tile fitter 910 along the Y axis 910 in both negative and positive directions by the user applying a force along the Y axis 910 during movement along the X axis 920.
d4) lifting the negative X 920 end of the chassis 280 along the positive Z axis 930, away from the adhesive bed 650.

FIG. 9 shows a longitudinal view of the positive Y 910 side of the tile fitter 200. In other words, the tile fitter 200 is viewed from the side in a negative Y axis 910 direction. At the time of installation as shown in FIG. 9, at least the following steps e1 to e2 have already been performed relative to the position shown in FIG. 8:
e1) the user tilted 505 the tile 500 of the tile fitter 200 (or slanted it) by picking up a negative X 920 edge of the tile 500 (the edge closest to the user).
e2) the user has at least partially moved the tile fitter 200 along the negative X direction 920 away 205 from the tile-to-be-installed 500.

After completing the step shown in FIG. 9, the installation of the tile 500 is completed by following at least the following steps f1 through f4:
f1) holding the tilt/slope of the tile 500, or increasing the tilt/slope of the tile 500 away from the tile fitter 200.
f2) moving the tile fitter 200 along the negative-X direction 920 completely away 205 from the tile-to-be-installed 500.
f3) lowering 507 the tile 500 to the adhesive bed 650.
f4) Press the tile 500 fully into the adhesive bed 650 to reduce the risk of the adhesive contact area of the applied tile 500 being too low and to reduce the risk of voids or cavities between the applied tile 500 and the underlying surface 800.

One of the insights on which the invention relies is to take maximum advantage of balance during laying by tilting and shifting weight. The apparent weight of the tile hanging approximately at equilibrium becomes significantly lower for the tile fitter to drive through the adhesive bed without significantly disturbing the adhesive bed. Better use of balance makes it possible for one craftsman to safely manipulate heavy, awkwardly large tiles 500. Many countries have guidelines and legislation limiting maximum lifting weights. For example, according to www.vakcentrum.nl/paginas/openbaar/onderwerpen/werkgeverschap/arbocatalogus/richtl ijnen-voor-maximum-tilgewichten, the preferred target is a maximum lifting weight of 23 kg per person, assuming an "optimal lifting situation": the load can be lifted straight in front of the body, lifting is done at hip height, the load can be lifted against the body, the load can be held securely, lifting is done no more than once every 5 minutes, and lifted by an adult. In practice, there is often no such "optimal lifting situation. In that case, lower lifting weights should be sought. The following guidelines for maximum lifting weights can be used: lifting above head height (175 cm) = 4 kg; two-handed lifting by youths (up to 16 years) = 10 kg; two-handed lifting from ground to hip height close to the body = 15 kg; two-handed lifting between knee and chest height = 12 kg; two-handed lifting from ground to hip height further from the body = 10 kg; two-handed lifting around hip height and turning 90° = 8 kg; two-handed lifting ground hip height far from body plus turning back = 6 kg; sitting, kneeling or squatting lifting = 10 kg; one-handed lifting in favorable situation = 14 kg; and lifting six times per minute = 17 kg. If lifting weights exceed the stated maximums, measures should be taken, either by using assistive devices or by lifting with more than one person.

Thus, it may be advantageous to arrange the tile fitter 200 to manipulate a tile 500 weighing 10 kg or greater, or weighing 15 kg or greater, or weighing 20 kg or greater, or weighing 25 kg or greater.

Thus, it may be advantageous to arrange the tile transporter 300 to move a tile 500 to be moved with a weight of 10 kg or larger, or with a weight of 15 kg or larger, or with a weight of 20 kg or larger, or with a weight of 25 kg or larger.

One of the insights upon which the invention is based is that such a fitting device 200 may include wheels arranged to reduce and, in some cases, minimize disruption and/or deformation of the adhesive bed 650 during installation. This is accomplished by utilizing scoring wheels 220 having a small average transverse thickness. FIG. 13 shows cross-sections through examples of suitable adhesive scoring wheels 220, for example crosssection 1220e having a tapered profile at the wheel edge 1224 and having a flat ground contact surface 1225. Examples of important parameters g1 through g5, which can be predetermined and/or controlled, are shown for cross section 1220e:
g1) an average transverse thickness 1223 proximate the wheel edge 1224. In use, this transverse thickness 1223 is the widest part of a scoring wheel 220 that can come in contact with adhesive in the adhesive bed. Optionally, the transverse thickness is less than the distance between glue beads or between glue rows. For example, the average transverse thickness 1223 may be 10 mm or less, or may be 7.5 mm or less, or may be 5 mm or less, or may be 2.5 mm or less. Optionally, a scoring wheel 220 may include one or more thickenings and/or widenings (1222 in FIG. 12) proximate the axis 1221 of rotation, such as one or more portions of a hub.
g2) an average transverse thickness of a ground contact surface 1225. This is the portion of the wheel edge 1224 of a scoring wheel 220 that is in contact with the underlying surface during installation, and the portion that may be in contact with the adhesive. For example, the average transverse thickness of the ground contact surface 1225 may be 10 mm or less, or 7.5 mm or less, or 5 mm or less, or 2.5 mm or less, or 1 mm or less, or 0.5 mm or less.
g3) an average radius 1227 from the scoring wheel 220 to the ground contact surface 1225. This radius 1227 largely determines the clearance height of the tile fitter during installation. Clearance height is an average vertical distance between the underlying surface and the underside of the tile fitter, and in particular the underside of the chassis.

The adhesive bed is less disturbed and/or deformed if the clearance height is greater than the vertical height of the adhesive beads, for example, between 5 mm to 15 mm thick. For example, the average radius 1227 of the scoring wheel 220 may be 100 mm or less, or 75 mm or less, or 50 mm or less, or 25 mm or less, or 15 mm or less.
g4) the materials used for the scoring wheel 220. For example, a scoring wheel 220 having a high percentage of metal is preferred to make the scoring wheel 220 thin. For example, aluminum or steel can be used.
g5) a cross section having a profile tapering toward the wheel edge, or having more than one transverse thickness. For example, 1220a uses a concave tapering profile between an average transverse thickness 1223 proximate the wheel edge 1224 and an average transverse thickness of a flat ground contact surface 1225. For example, 1220b uses a convex tapering profile between an average transverse thickness 1223 proximate the wheel edge 1224 and an average transverse thickness of a round ground contact surface 1225. For example, 1220c uses a step profile between an average transverse thickness 1223 proximate the wheel edge 1224 and an average transverse thickness of a flat ground contact surface 1225. For example, 1220d uses a V-shaped tapered profile between an average transverse thickness 1223 proximate the wheel edge 1224 and an average transverse thickness of a knife edge ground contact surface 1225. For example, 1220f uses a V-shaped tapered profile between an average transverse thickness 1223 proximate wheel edge 1224 and an average transverse thickness of a tip ground contact surface 1225. For example, 1220g uses an average transverse thickness 1223 proximate the wheel edge 1224 with an average transverse thickness of a round ground contact surface 1225.

Optionally, glue residue on the at least two scoring wheels 220 can be removed regularly, for example, four times a day. Removal (or cleaning) of the adhesive residue may be done in-situ. Optionally, it may be advantageous to arrange one or more of the scoring wheels 220 for easy removal.

Moving wheels, such as the small moving wheel 210 shown in FIG. 12, are distinguished from scoring wheels 220 by a much greater average transverse thickness. Moving wheels also more often use a softer material, such as a rubber and/or a polymer.

Depending on the size of the tiles to be installed, the tile fitter 200 can be arranged to install different sizes more easily. For example, the tile fitter 200 as shown in the figures is suitable for installing a tile with the average dimensions of 120 cm × 120 cm × 11 mm with a weight of 32kg. For example, the following dimensions h1 to h4 depend on the size of tile-to-be-installed 500:
h1) the one or more tile openings 240 has an opening at least as wide as the average thickness of the tile-to-be-installed 500. This can be arranged, for example, by making the width adjustable, making the one or more tile openings 240 replaceable by one or more tile openings of different widths for standard tile thicknesses, using one or more tile openings 240 having a tapered or stepped profile so that the edges of thinner tiles 500 are received deeper than for thicker tiles 500.
h2) the dimension along the X axis 920 of the first portion 501 as shown in FIG. 7.
h3) the dimension along the X axis 920 of the second portion 502 as shown in FIG. 7.
h4) the dimension along the X axis 920 from the one or more tile openings 240 to the spacers 260 as shown in FIG. 7.

As described above, at the time of installation as illustrated in FIG. 7, the tile-to-be-installed 500 has already been received by the tile fitter 200. The tile fitter 200 is less suitable for use when transporting the tile-to-be-installed 500 over longer distances because the tile fitter 200 must be pushed and/or pulled close to the ground. In addition, a horizontally oriented large tile 500 will not fit through a standard doorway. Therefore, it may be advantageous to provide a tile transporter that can work in conjunction with the tile fitter 200.

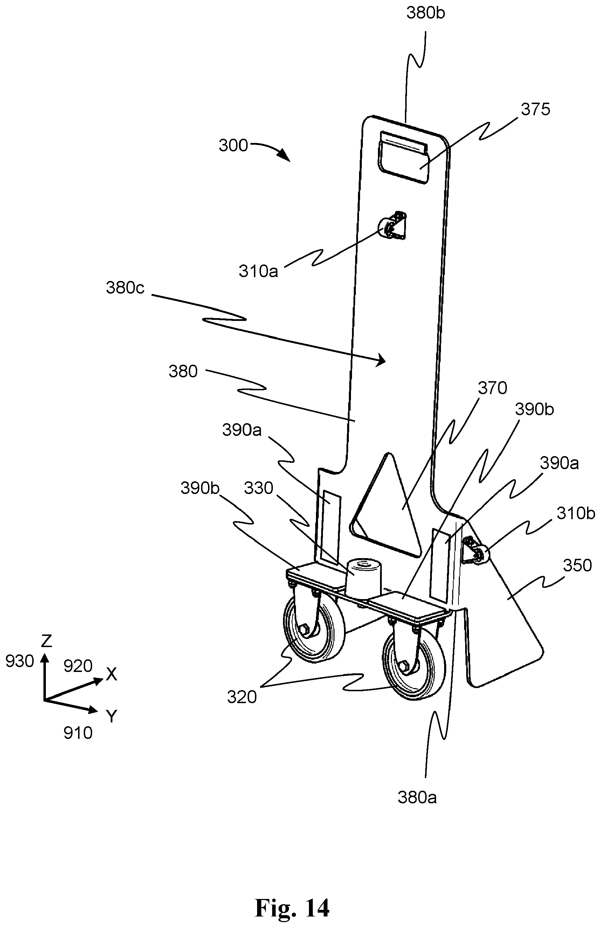

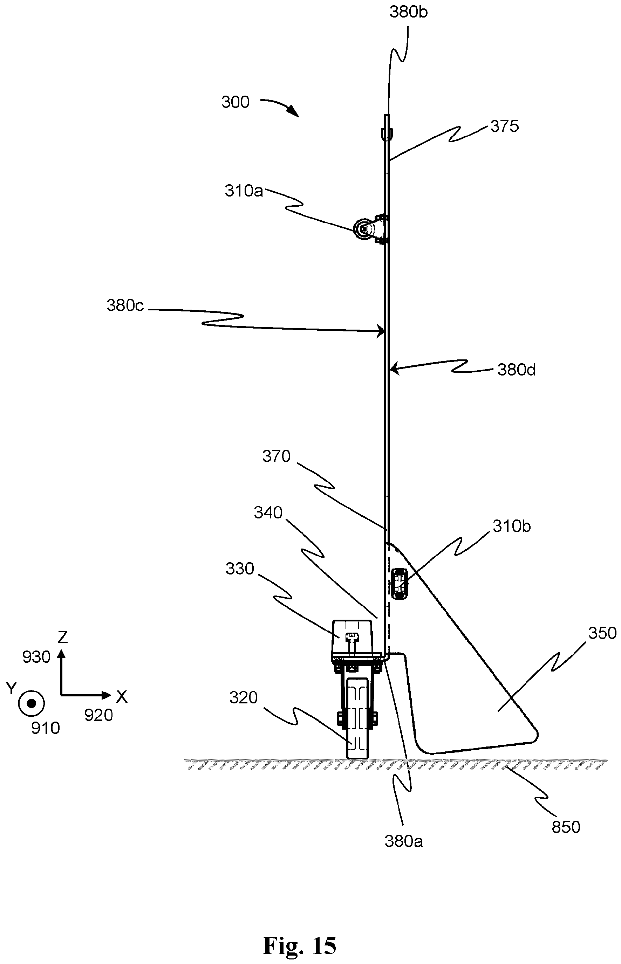

FIG. 14 and FIG. 15 show schematic examples of a tile transporter 300 (or tile transport device) for moving tiles 500 prior to installation. It is advantageous to arrange the tile transporter 300 to move large tiles 500 vertically prior to installation - in other words, suitable for moving tiles 500 in a vertical position. It is advantageous to equip the tile transporter 300 to move XL or XXL tiles. It is advantageous if the tile transporter 300 is arranged to be manually operated. It is advantageous if the tile transporter 300 is arranged to move large-tiles over longer distances to the tile fitter. For example, from a workstation where adhesive can be applied, from a workstation where tile 500 can be cut to size, or from a supply area. In this disclosure, the shortened term transporter 300 is also used instead of tile transporter 300. FIG. 14 shows a perspective view of the transporter 300. The Y axis 910 is shown from left to right, the X axis 920 is shown in the figure, and the Z axis 930 is shown from bottom to top. FIG. 15 shows a transverse view of the positive Y 910 side of the transporter 300. In other words, the transporter 300 is viewed from the side in a negative Y axis 910 direction.

As shown, the transporter 300 includes a chassis 380 extending along a plane comprising the Z axis 930 and the Y axis 910. The chassis 380 extends longitudinally along the Z-axis 930 (longitudinal axis) from a first end 380a to a second end 380b. Further, the chassis 380 extends in the transverse direction along the Y axis 910 (transverse axis). In this example, the longitudinal dimension 930 is larger than the transverse dimension 910. The chassis 380 is shown in a roughly vertical position, viewed from slightly to the right of a first surface 380c (a tile surface) of the chassis 380. A second surface of the chassis 380 is not shown in FIG. 14.

The transporter 300 further includes at least two large moving wheels 320, rotatably attached to the chassis 380, proximate the first end 380a of the chassis 380. The large moving wheels 320 are arranged to rotate and to support both the transporter 300 and the tile to be moved while the transporter 300 is moved along the ground. Optionally, the transporter 300 may be further arranged to also support the tile fitter (not shown) as the transporter 300 is moved along the ground.

The at least two large moving wheels 320 are arranged for moving. For example, the average transverse thickness proximate the wheel edge may be 20 mm or greater, or 25 mm or greater, or 35 mm or greater, or 40 mm or greater. It may be advantageous to use wheels with a large radius between the axis of rotation and the contact surface. For example, the average radius of the at least two large moving wheels 320 may be 25 mm or greater, or 50 mm or greater, or 75 mm or greater, or 100 mm or greater

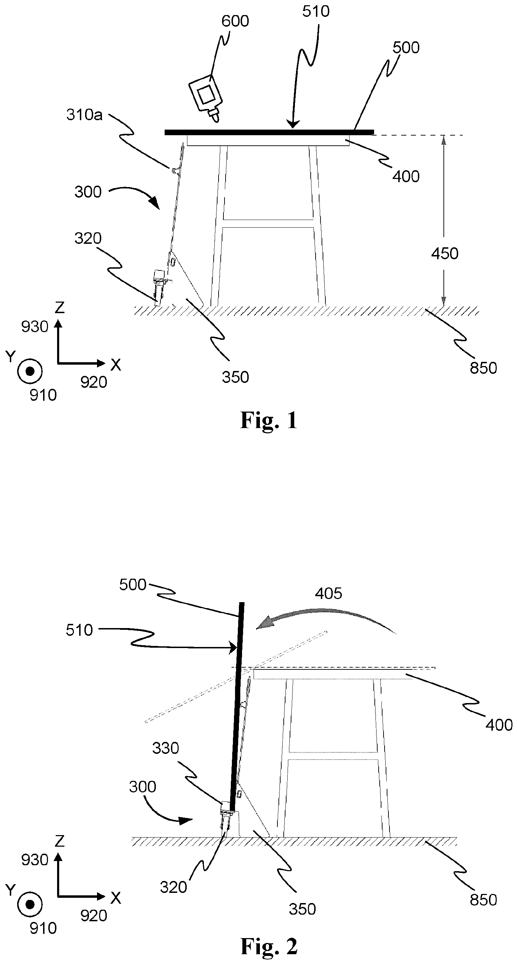

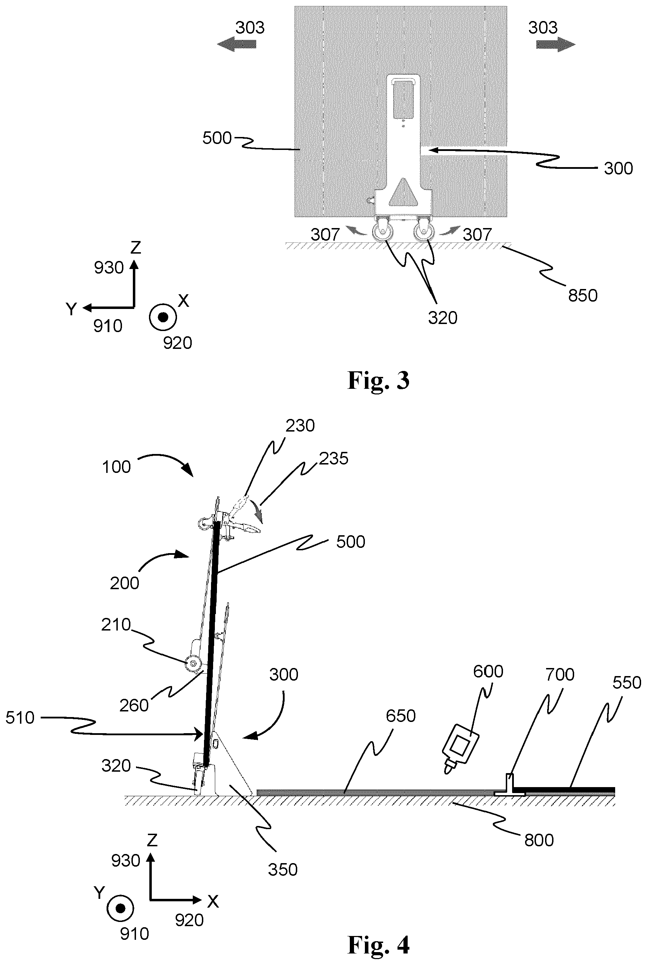

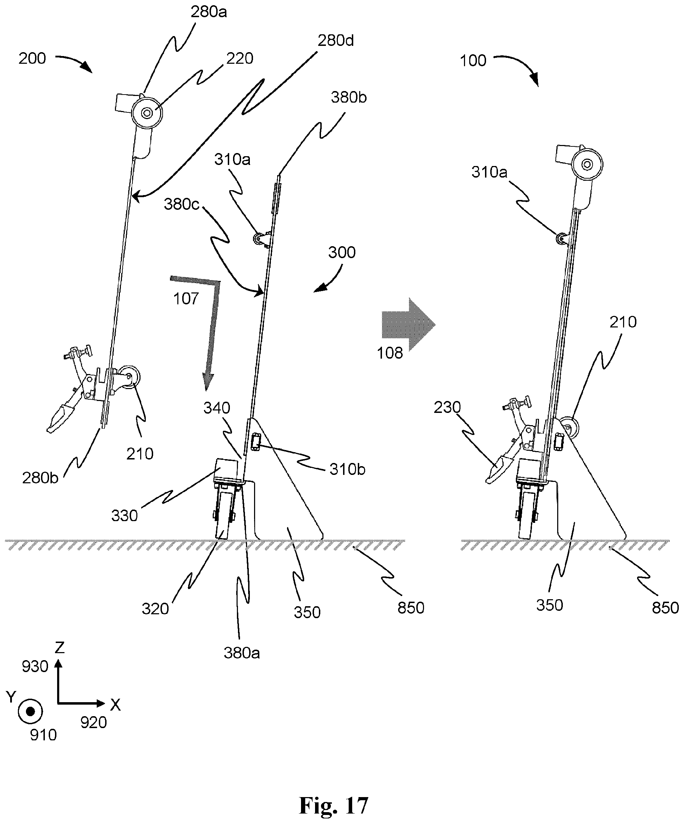

The transporter 300 further includes at least two supports 350, attached to the chassis 380, proximate the first end 380a of the chassis 380, proximate the two large moving wheels 320. The supports 350 are arranged to hold the transporter 300 in an approximately vertical orientation relative to a ground surface 850 between movements under three different loading conditions: empty (only the transporter 300 as shown in FIG. 1 and to the left of FIG. 17), after receiving a large tile (such as the transporter 300 illustrated in FIG. 2) and after receiving the large tile AND a tile fitter (such as the transporter 300 illustrated in FIG. 4). The at least two supports 350 are further arranged to receive a force along the negative X-axis 920 to rotate the transporter 300 around the Y-axis 910. With a small amount of rotation around the Y-axis 910, the weight of the load is transferred to the large moving wheels 320 during movement (such as the transporter 300 illustrated in FIG. 15 without load), making it easier for the large tile to be moved by one person over greater distances. One skilled in the art understands that the at least two supports 350 may be integrated into one or more supports, wherein the one or more supports are arranged at two or more positions to hold the transporter 300 in a roughly vertical orientation relative to a ground surface 850.

The tile transporter 300 further includes a recess, positioned at the first surface 380c of the chassis 380, proximate the first end 380a of the chassis 380. In other words, the recess is positioned at the end 380a having the two large moving wheels 320 and having the at least two supports 350. The recess has one or more tile openings 340 at least as large as the thickness of the tile to be moved. The tile transporter 300 is arranged to receive a tile, such that an edge of the tile is received by the one or more tile openings 340 and at least a portion of the tile is supported by a small moving wheel 3 10a. A person skilled in the art understands that one or more suitable tile openings 340 may be arranged using an edge, a recess, a niche, a notch, a cut, a hollow, a slot, a cavity, a groove, a slot, or a combination thereof.

In the illustrated example, the one or more tile openings 340 are at least partially formed by an edge of a clamp 330 and the first surface 380c of the chassis 380, wherein the clamp 330 is attached to the first end 380a of the chassis 380 opposite the first surface 380c of the chassis 380 .

Optionally, the chassis 380 may be provided with one or more chassis protective parts 390ab. For example, one or more vertical chassis protective parts 390a may be provided on the first surface 380c of the chassis 380 opposite the clamp 330. For example, one or more horizontal chassis protective parts 390b may be provided on the chassis 380 adjacent to the clamp 330. Optionally, the one or more chassis protective parts 390ab may be arranged to reduce the risk of damage to the tile by the chassis 380. Optionally, the one or more chassis protective parts 390ab may be arranged to reduce the risk of damage of the chassis 380 by the tile. The one or more chassis protective parts 390ab may include a resilient and/or soft material, for example, natural fabric, synthetic fabric, textile, rubber, felt, foam, plastic, polymer, PTFE, bioplastic, wood, cardboard, aluminum, copper, bronze, steel, spring steel, or any combination thereof.

Optionally, the one or more vertical chassis protective parts 390a may be arranged to at least partially form the one or more tile openings 340.

In other words, in the illustrated example, the clamp 330 is arranged to hold the tile to be moved in place by exerting a force against the tile to be moved in the direction of the tile surface 380c of the chassis 380 and against a small moving wheel 310a.

Optionally, more than one clamp 330 can be used. Optionally, the clamp 330 may be adjustable arranged to clamp different tile thicknesses - for example, by using a bolt and slotted hole to secure the clamp 330. For example, the one or more tile openings 340 may be adjustable to accommodate different thicknesses of tile 500 to be moved. Optionally, the clamp 330 may include a clamp protective part (not shown) arranged to reduce the risk of damage to the tile by the clamp 330. Optionally, the clamp protective part may be arranged to reduce the risk of damage to the clamp by the tile. The tile protective part may include a resilient and/or soft material, for example, natural fabric, synthetic fabric, textile, rubber, felt, foam, plastic, polymer, PTFE, bioplastic, wood, cardboard, aluminum, copper, bronze, steel, spring steel, or any combination thereof.

In the example shown, the chassis 380 further includes an optional access opening 370 arranged to receive a coupling piece from a tile fitting kit (not shown), which allows the tile transporter 300 to be coupled to the tile fitting kit (not shown). This can be advantageous while transporting a tile fitting kit (not shown) comprising a tile transporter 300 and a tile transporter (not shown. In the example shown, the access opening 370 has a triangular shape. The access opening 370 may have any suitable shape, for example, square, rectangle, polygon, circle, oval, ellipse, stadium or any combination thereof. Optionally, the corners may be approximately straight or at least partially rounded.

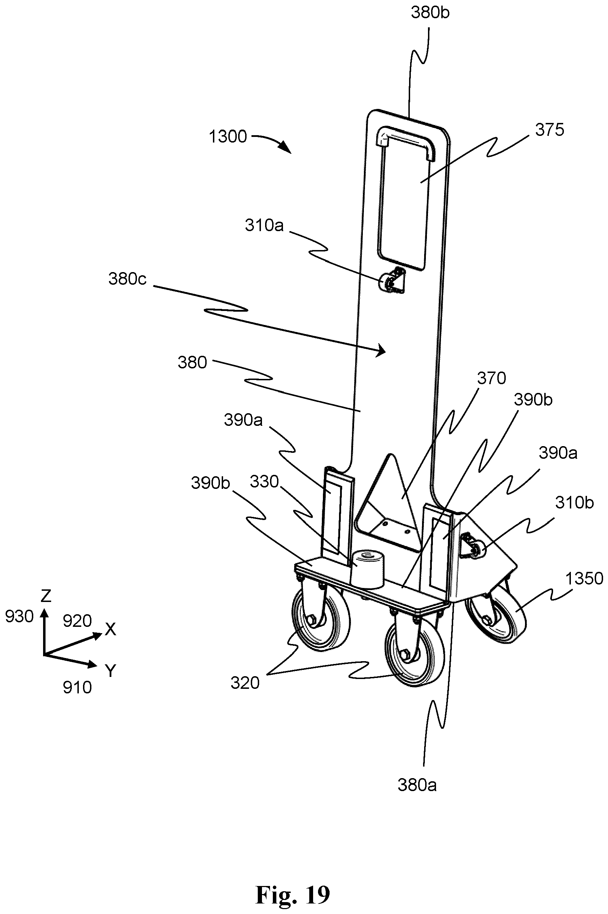

In the illustrated example, the chassis 380 further includes an optional grip opening 375 arranged to allow the user to manipulate the transporter 300 during movement by, for example, moving the transporter 300 when the transporter 300 is supported by one of the small moving wheels 310. The grip opening 375 may optionally be arranged to lift the positive Z 930 end (second end 380b) of the chassis 380. In the example shown, the grip is created by an opening 375 - alternatively, a handle or knob may be used, attached to the chassis 380. Alternatively, more than one grip can be provided. In the illustrated example, the grip opening 375 has a rectangular shape. The grip opening 375 may have any suitable shape, for example, triangle, square, polygon, circle, oval, ellipse, stadium or any combination thereof. Optionally, the corners may be approximately straight or at least partially rounded. Alternatively, the grip opening 375 may be extended toward the first end 380a, as shown in FIG. 19.

The transporter 300 further includes at least two small moving wheels 310ab, wherein the first wheel 310a is rotatably attached to the tile surface of the chassis 380 at the positive Z 930 end (second end 380b). The first wheel 310a is arranged to support at least a portion of the tile to be moved. The second small moving wheel 310b is optional, and rotatably attached to the side of one of the supports 350 at the negative Z end 930 (first end 380a) of the chassis 380. The moving wheels 310ab are arranged to rotate and support the transporter 300 when the tile 500 is transferred to the tile fitter. The moving wheels 310ab may have a fixed orientation. Alternatively, the moving wheels 3 10ab may be arranged to rotate.

The at least two small moving wheels 3 10ab are arranged for moving. For example, the average transverse thickness proximate the wheel edge may be 15 mm or greater, or 20 mm or greater, or 25 mm or greater. It may be advantageous to use wheels with a small radius between the axis of rotation and the contact surface. For example, the average radius of the at least two small moving wheels 3 10ab may be 25 mm or less, or may be 20 mm or less, or may be 15 mm or less, or may be 10 mm or less.

The transporter 300 is suitable for use by, for example, an assistant, a hobbyist, a do-it-yourselfer, a laborer, a craftsman or a tiler. The transporter 300 can be used to transport (move) any tile suitable for use to cover a floor (also called a subfloor or ground) as described above.

FIG. 3 through FIG. 6 show schematic side views during the transfer of a tile-to-be-installed 500 from a transporter 300 to a tile fitter 200.

FIG. 3 shows a longitudinal view of the positive X 920 side of the transporter 300. In other words, the transporter 300 is viewed from the side in a negative X axis 920 direction. At the time of transport as shown in FIG. 3, at least the following steps i1 through i4 have already been performed:
i1) the tile transporter 300 has received the tile 500 to be moved, wherein one edge of the tile 500 is received by the clamp/opening (not shown), and at least a portion of the tile 500 is supported by the first small moving wheel (not shown). The surface of the tile 500 that will become the top surface of the tile 500 during installation is oriented toward the first surface of the chassis 380 and visible in FIG. 3. The surface of the tile 500 that will become the lower surface 510 (adhesion surface 510) of the tile 500 during installation is not visible in FIG. 3.
i2) the large moving wheels 320 are arranged to at least partially support both the transporter 300 and the tile 500 during movement.
i3) the at least two supports 350 are arranged to hold the transporter 300 in an approximately vertical orientation relative to a ground surface 850 such that it remains standing between moves after receiving a large tile 500. In other words, the at least two supports 350 are arranged to at least partially support both the transporter 300 and the tile 500 being moved.
i4) a user applied force, for example along the negative X-axis 920, to rotate the transporter 300 around the Y-axis 910. With a small rotation around the Y-axis 910, the weight of the load (in this case, the transporter 300 and the large tile 500) was transferred from the supports to the large moving wheels 320, allowing the large tile 500 to be easily moved 303 by one person in any direction.

Optionally, one or more of the following steps j 1 may have already been performed: j 1) apply adhesive to the adhesion surface 510 of the tile 500 before the tile 500 is received by the tile transporter 300 as described above. Optionally, the adhesive may be applied using the flat side of a glue comb or trowel (buttering). Optionally, the adhesive may be applied using a glue gun or glue gun.

FIG. 4 shows a longitudinal view of the positive Y 910 side of the transporter 300, the tile-to-be-installed 500 and a tile fitter 200. In other words, the transporter 300, the tile-to-be-installed 500 and the tile fitter 200 are viewed from the side in a negative Y 910 direction. The tile 500 is to be installed on an underlying surface 800. At the time of transport as shown in FIG. 4, at least the following steps k1 through k4 have already been performed relative to the position shown in FIG. 3 depicted:
k1) an adhesive bed 650 is applied to the location where the tile 500 is to be installed, as described above with reference to FIG. 7.
k2) a user applied force to transfer the weight of the load (in this case, the transporter 300 and the large tile 500) from the supports to the large moving wheels 320, allowing the large tile 500 to be easily moved to the installation position by one person.
k3) the transporter 300 and the large tile 500 are moved to a position where the at least two supports 350 of the transporter 300 are located proximate an edge of the adhesive bed 650.
k4) a tile fitter 200 is attached to the large tile 500 as described above. The tile fitter 200 has received the tile 500, wherein the edge of the tile 500 are accommodated by the one or more tile openings 240 and at least a portion of the adhesion surface 510 of the tile 500 are supported by the spacers 260. The tile fitter 200 and the transporter 300 are included in a tile fitting kit 100.

Optionally, one or more of the following steps l1 through l4 may have already been performed relative to the position shown in FIG. 3 shown:
l1) the underlying surface 800 can be cleaned as described above with reference to FIG. 7.
l2) the underlying surface 800 may be leveled as described above with reference to FIG. 7.
l3) one or more leveling clips 700 may be applied as described above with reference to FIG. 8.
l4) the tile-to-be-installed 500 can be clamped to the tile fitter 200 by tightening 235 the optional clamp 230. Using a clamp 230 gives the user more control during tilting.

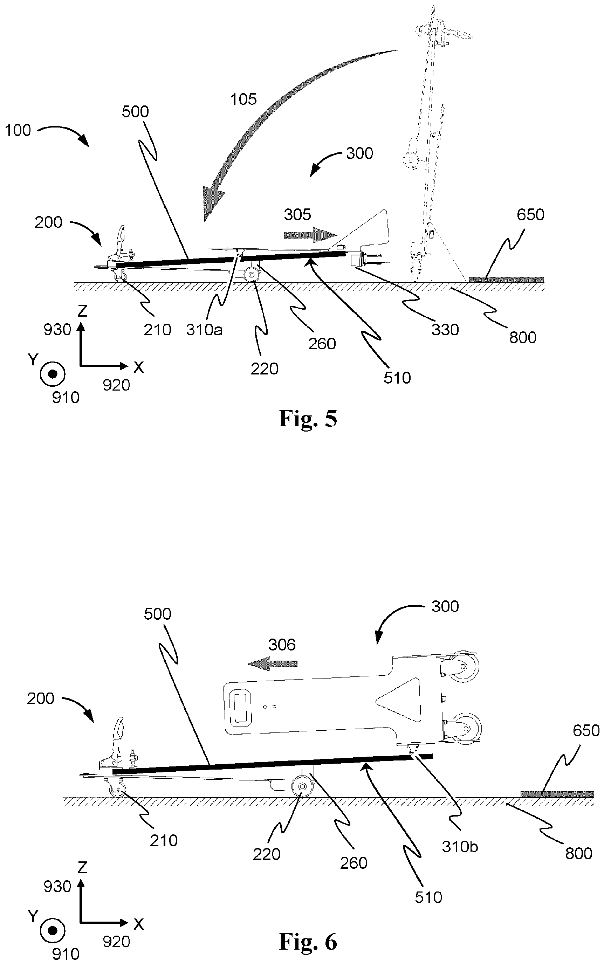

FIG. 5 shows a longitudinal view of the positive Y 910 side of the transporter 300, the tile-to-be-installed 500 and a tile fitter 200. In other words, the transporter 300, the tile-to-be-installed 500 and the tile fitter 200 are viewed from the side in a negative Y 910 direction. The tile 500 is to be installed on an underlying surface 800 provided with an adhesive bed 650. At the time of transport as shown in FIG. 5, at least the following steps m1 through m2 have already been performed with respect to the position shown in FIG. 4 depicted:
m1): the transporter 300, the tile-to-be-installed 500 and the tile fitter 200 are tilted downward 105 from an approximately vertical orientation to an approximately horizontal orientation, so that the scoring wheels 220 and the small moving wheel 210 of the tile fitter 200 are in contact with the underlying surface 800. In other words, the tile fitting kit 100 (encompassing the tile fitter 200 and the transporter 300) is rotated 105 around the Y axis 910, along with the tile-to-be-installed 500. The clamp 330 / opening 340 is arranged to allow the tile transporter 300 to tilt along with the tile fitter 200 and the tile-to-be-installed 500.
m2) the transporter 300 is slid away 305 from the tile fitter 200 along the X-axis 920 in a positive direction. The transporter 300 is supported by the first small moving wheel 310a, which moves over the top surface of the tile-to-be-installed 500. By moving the transporter 300 away from the tile fitter 200, the positive X 920 edge of the tile 500 is disengaged from the clamp 330 / opening 340.

FIG. 6 shows a longitudinal view of the positive Y 910 side of the transporter 300, the tile-to-be-installed 500 and a tile fitter 200. In other words, the transporter 300, the tile-to-be-installed 500 and the tile fitter 200 are viewed from the side in a negative Y 910 direction. The tile 500 is to be installed on an underlying surface 800 provided with an adhesive bed 650. At the time of transport as shown in FIG. 6, at least the following steps n1 through n2 have already been performed relative to the position shown in FIG. 5:
n1) after releasing the positive X 920 edge of the tile 500 from the clamp 330 / opening 340, the transporter 300 was rotated approximately 90 degrees clockwise by the user around the X axis 920. In other words, the transporter 300 was rotated clockwise by the user until it was supported by the second moving wheel 310b against the top surface of the tile-to-be-installed 500.
n2) the transporter 300 was then completely removed by moving it back 306 toward the tile fitter 200.

After completing the step shown in FIG. 6 and removing the transporter 300, the tile is installed as written above with reference to FIG. 7. Installation of the tile 500 can be completed by following the procedures described above with respect to FIG. 7 through FIG. 9.

Depending on the size of the tiles to be installed, the tile transporter 300 can be arranged to move different sizes more easily. For example, the tile transporter 300 as shown in the figures is suitable for moving a tile with the average dimensions of 120 cm × 120 cm × 11 mm with a weight of 32kg. For example, the following dimensions o1 to o2 depend on the size of the tile 500 to be moved:
o1) the one or more tile openings 340 has an opening that is at least as wide as the average thickness of the tile 500 to be moved. This can be controlled, for example, by making the position of the clamp 330 adjustable, making the clamp 330 replaceable by clamps with different diameters for standard tile thicknesses, a clamp 330 with a tapered or stepped profile so that the edges of thinner tiles 500 are received deeper than for thicker tiles 500.
o2) the dimension along the Z axis 930 from the one or more tile openings 340 to the first small moving wheel 310a, as shown in FIG. 15.

Before loading a large tile 500 onto a transporter 300, any suitable workstation, such as a table, can be used to apply adhesive and/or to cut the tile to size. Figs. 1 through Fig. 2 show schematic side views during examples of tile preparation at a suitable workstation, followed by transferring the tile 500 to a transporter 300.

FIG. 1 shows a longitudinal view of the positive X 920 side of the transporter 300 and of a table 400 (or trestle). In other words, the transporter 300 and table 400 are viewed from the side in a negative X axis 920 direction. At the time of preparation shown in FIG. 1, at least the following steps p1 through p2 have already been performed:
p1) a suitable table 400 (or trestle) was provided. Suitable means that it is large enough to firmly support a large tile 500 during preparation, strong enough to firmly support the weight, and with a top surface at a height 450 sufficient to allow the large tile 500 to be turned on the transporter 300. For example, the height 450 of the top surface may be 800 millimeters or more, or may be 850 millimeters or more. Preferably, the height 450 of the top surface is greater than or equal to the height of the transporter 300, such that the second end of the transporter 300 does not extend above the top surface.
p2) the empty transporter 300 is moved to a position where the at least two supports 350 are located proximate the table 400. The at least two supports 350 are arranged to keep the transporter 300 in a roughly vertical orientation relative to a ground surface 850. The at least two supports 350 are arranged to partially support the transporter 300. The large moving wheels 320 are arranged to also partially support the transporter 300. The transporter 300 is capable of receiving the large tile 500 after it is rotated from the top surface of the table 400.

Optionally, one or more of the following steps q1 through q2 may have already been performed:
q1) the large tile 500 is placed on the top surface of the table 400. For proper orientation, after moving a tile 500 with the transporter 300 and transferring the tile 500 to the tile fitter 200, the adhesion surface 510 of the tile 500 should be oriented in the positive Z 930 direction. In other words, the tile 500 must be placed upside down on the top surface of the table 400.
q2) the adhesion surface 510 of the tile 500 is coated with adhesive 600, as described above, before the tile 500 is transferred to the transporter 300.

FIG. 2 shows a longitudinal view of the positive X 920 side of the transporter 300 and of the table 400 (or trestle). In other words, the transporter 300 and table 400 are viewed from the side in a negative X axis 920 direction. At the time of preparation shown in FIG. 2, at least the following steps r1 through r2 have already been performed relative to the position shown in FIG. 1:
r1) the large tile 500 is transferred from the table 400 by rotating 405 the tile 500 from the top surface and setting it down on the transporter 300. In the example shown, the tile 500 is rotated counterclockwise around the Y axis 910. However, the transporter 300 may be placed on any suitable side of the table 400 where the tile 500 can be received. Movement of the tile 500 across the transporter 300 is facilitated by the first small moving wheel 310.
r2) the tile transporter 300 received the tile 500, wherein one edge of the tile 500 was received by the clamp 330 / opening 340, and at least a portion of the tile 500 was supported by the first small moving wheel 310a. The surface of the tile 500, which will become the "top surface" of the tile 500 during application, was directed to the first surface of the chassis 380.

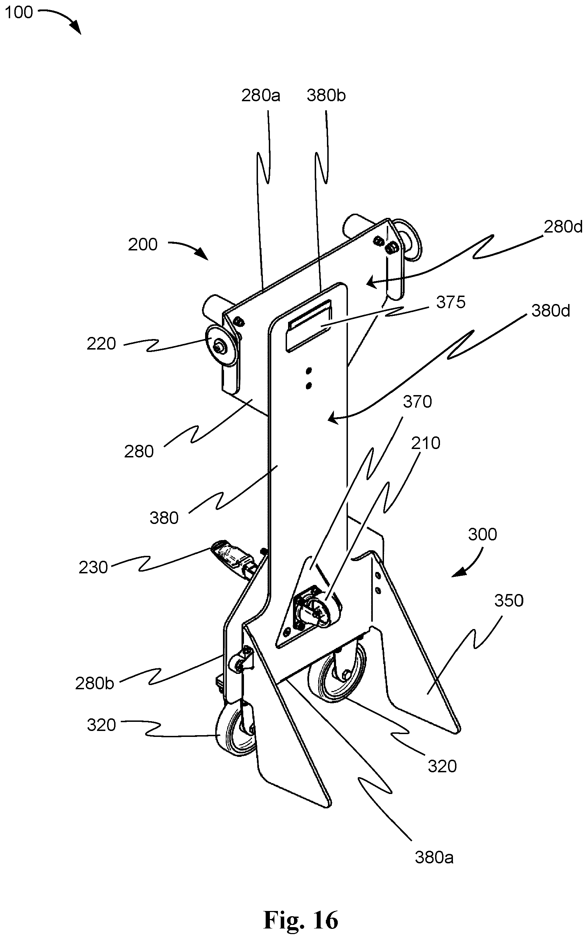

It may be advantageous to provide a tile fitting kit comprising a tile fitter, as described herein, and a tile transporter, as described herein. It may be further advantageous to arrange the tile fitter and/or tile transporter to connect with each other for transportation. FIG. 16 shows a schematic perspective of an example of a tile fitting kit 100 comprising a tile fitter 200 and a tile transporter 300 interlocking for transportation. FIG. 17 shows a schematic example of connecting the tile fitter 200 and the tile transporter 300 to provide a tile fitting kit 100 suitable for transportation.

The chassis 280 of the tile fitter 200 includes an access opening (such as 275 in FIG. 10 and FIG. 11) arranged to receive a coupling piece of the tile transporter 300. In this example, the coupling piece of the tile transporter 300 includes the first small moving wheel 3 10a.

The chassis 380 of the tile transporter 300 includes an access opening 370 arranged to receive a coupling piece of the tile fitter 200. In this example, the coupling piece of the tile fitter 200 includes at least one moving wheel 210.

In this example, the tile fitter 200 and the tile transporter 300 are connected by performing the following steps s1 to s6:
s1) the empty transporter 300 is moved to a position with enough space around it to receive the tile fitter 200. The at least two supports 350 are arranged to maintain the empty transporter 300 in an approximately vertical orientation relative to a ground surface 850, with the first end 380a of the chassis 380 proximate the ground and the second end 380b of the chassis 380 raised, as shown on the left side of FIG. 17. The at least two supports 350 are arranged to partially support the empty transporter 300. The large moving wheels 320 are arranged to also partially support the empty transporter 300.
s2) the empty tile fitter 200 is moved to a position opposite the tile transporter 300. The empty tile fitter 200 is in an approximately vertical orientation relative to a ground surface 850, with the first end 280a of the chassis 280 raised and the second end 280b of the chassis 280 proximate the ground, as shown on the left side of FIG. 17. Optionally, it may be advantageous to provide the tile fitter 200 with one or more supports (not shown) attached to the chassis 280, and arranged to hold the tile fitter 200 in a roughly vertical orientation relative to a ground surface 850.
s3) the second surface 280d of the chassis 280 of the tile fitter 200 is opposite the first surface 380c of the chassis 380 of the tile transporter 300, as shown on the left side of FIG. 17.
s4) the tile fitter 200 is moved toward the tile transporter 300 to make the first part of a "bring together and down" movement 107, as shown on the left side of FIG. 17. During bringing together, the coupling piece of the tile transporter 300, in this case the first small moving wheel 310a, is fed through the access opening (not shown) of the tile fitter 200. During bringing together, the coupling piece of the tile fitter 200, in this case the at least one moving wheel 210, is also fed through the access opening 370 of the tile transporter 300.
s5) the tile fitter 200 is moved downward to make the second part of the "together and downward" movement 107, as shown on the left side of FIG. 17. During the downward movement, the second end 280b of the chassis 280 of the tile fitter 200 is caught by the one or more tile openings 340 of the tile transporter 300.
s6) the tile fitting kit 100 is now suitable for transportation, as shown on the right side of FIG. 17, by the interlocking 108 of the tile fitter 200 and the tile transporter 300.

Optionally, it may be advantageous for transportation that the at least two supports 350 are arranged to partially support the transporter 300 and tile fitter 200. Optionally, it may be advantageous for transportation that the large moving wheels 320 are arranged to also partially support the transporter 300 and tile fitter 200.

Optionally, it may be advantageous for transportation that the clamp 330 / opening 340 of the tile transporter 300 is arranged to accommodate the second end 280b of the tile fitter 200, and further arranged to accommodate the average thickness of the tile to be moved. For example, by making the thickness of the second end 280b about the same as the average thickness of the tile to be moved. For example, by making the position of the clamp 330 adjustable. For example, by making the clamp 330 replaceable by clamps of different diameters for standard thicknesses of ends 280b. For example, by using a clamp 330 with a tapered or stepped profile, so that the edges of thinner ends 280b are received deeper than for thicker ends 280b.

Optionally, the one or more support wheels 350 may be implemented as one or more support wheels, rotatably attached to the chassis 380, proximate the first end 380a of the chassis 380. The one or more support wheels are arranged to rotate and support both the transporter 300 and the tile to be moved, while the transporter 300 is moved along the ground surface. The one or more support wheels are arranged to, between moves, maintain the transporter 300 in an approximately vertical orientation relative to a ground surface 850. A person skilled in the art understands that the one or more support wheels are arranged at one or more positions to maintain the transporter 300 in an approximately vertical orientation relative to a ground surface 850. The one or more support wheels are further arranged to receive a force along the negative X-axis 920 to rotate the transporter 300 around the Y-axis 910. With a small amount of rotation around the Y-axis 910, the weight of the load is transferred to the large moving wheels 320 during movement (as shown in FIG. 15 without load), making it easier for the large tile to be moved by one person over greater distances.

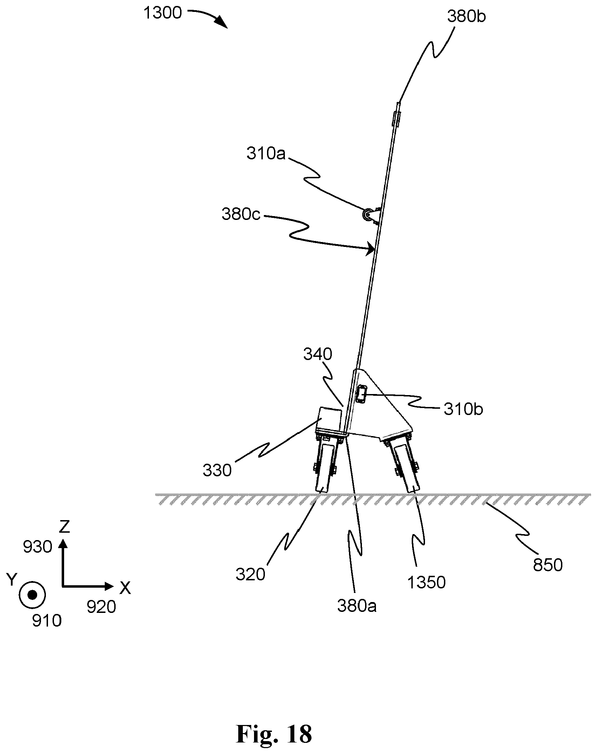

FIG. 18 and FIG. 19 schematically show a second embodiment 1300 of a transporter (a second transporter 1300). The second embodiment 1300 is the same as the first embodiment 300, except that the one or more supports 350 of the first transporter 300 are implemented in the second transporter 1300 as two or more support wheels 1350, rotatably attached to the chassis 380, proximate the first end 380a of the chassis 380. The two or more support wheels 1350 are arranged to rotate and support both the second transporter 1300 and the tile to be moved, while the transporter 1300 is moved along the ground. FIG. 18 shows a side view of the second transporter 1300, shown in the same manner and position as the first transporter 300 as shown in FIG. 1 and to the left of FIG. 17. FIG. 19 shows a side view of the second transporter 1300, depicted in the same manner and position as the first transporter 300 as shown in FIG. 14.

The two or more support wheels 1350 are arranged to hold the second transporter 1300 in an approximately vertical orientation relative to a ground surface 850 between moves under three different loading conditions: empty (only the transporter 1300 as shown in FIG. 18), after receiving a large tile (not illustrated for the second transporter 1300 but similar to the first transporter 300 illustrated in FIG. 2), and after receiving the large tile AND a tile fitter (not illustrated for the second transporter 1300 but similar to the first transporter 300 illustrated in FIG. 4). A skilled person understands that the two or more support wheels 1350 are arranged at two or more positions to hold the transporter 300 in a roughly vertical orientation relative to a ground surface 850. The two or more support wheels 1350 are further arranged to receive a force along the negative X-axis 920 to rotate the transporter 300 around the Y-axis 910. With a small amount of rotation around the Y-axis 910, the weight of the load is transferred to the large moving wheels 320 during movement (not shown for the second transporter 1300 but similar to the first transporter 300 shown in FIG. 15 without a load), making it easier for the large tile to be moved by one person over greater distances. The second transporter 1300 is further suitable for moving a tile in a similar manner to the first transporter 300.

Optionally, the one or more spacers 260 may be implemented as one or more spacer wheels attached to a first surface 280c of the chassis 280, proximate the at least two scoring wheels 280. The one or more spacer wheels are arranged to support the adhesion surface 510 (lower surface 510) of the tile 500, whereby space was provided between the scoring wheels 220 and the adhesion surface 510 of the tile-to-be-installed 500. The one or more spacer wheels are further arranged to rotate and support the tile-to-be-installed 500, while the tile-to-be-installed 500 is moved relative to a first surface 280c of the chassis 280. Optionally, the one or more spacer wheels may be arranged to support displacement or movement of the tile 500 along the Y axis 910, along the X axis 920, or a combination thereof. This allows, for example, one or more horizontal displacements (movements) and/or one or more rotations about the Z-axis 930 to align and/or correct the location of the tile-to-be-installed 500 relative to a first surface 280c of the chassis 280. For example, the one or more spacer wheels may be arranged to allow a user to manipulate the tile 500 prior to installation and/or during installation by, for example, moving the tile 500 along the Y axis 910, along the X axis 920, around the Z axis 930, or a combination thereof. The one or more spacer wheels may have a fixed orientation. Alternatively, the one or more spacer wheels may be rotatably arranged.

FIG. 20 schematically shows a second embodiment 1200 of a tile fitter (a second tile fitter 1200). The second embodiment 1200 is the same as the first embodiment 200 except for differences t1 through t3.
t1): the one or more spacers 260 of the first tile fitter 200 are implemented as two or more spacer wheels 1260, attached to a first surface 280c of the chassis 280, proximate the at least two scoring wheels 280. The two or more spacer wheels 1260 are arranged to support the adhesion surface 510 (lower surface 510) of the tile 500, whereby space was provided between the scoring wheels 220 and the adhesion surface 510 of the tile-to-be-installed 500. The two or more spacer wheels 1260 are further arranged to rotate and support the tile-to-be-installed 500 while the tile-to-be-installed 500 is moved relative to a first surface 280c of the chassis 280. As shown in FIG. 20, the two or more spacer wheels 1260 are arranged to support displacements (or movements) of the tile 500 in negative and/or positive directions along the Y-axis 910. This allows, for example, one or more horizontal displacements (movements) and/or one or more rotations about the Z-axis 930 to align and/or correct the position of the tile-to-be-installed 500 with respect to a first surface 280c of the chassis 280. For example, the two or more spacer wheels 1260 may be arranged to allow a user to manipulate the tile 500 prior to installation and/or during installation by, for example, moving the tile 500 along the Y-axis 910. The two or more spacer wheels 1260 may have a fixed orientation. Alternatively, the two or more spacer wheels 1260 may be rotatably arranged.
t2): as shown, the second tile fitter 1200 is provided with one or more supports 250 attached to the chassis 280. Optionally, the first tile fitter 200 may also be provided with one or more supports (not shown). The one or more supports 250 are arranged to hold the tile fitter 200, 1200 in an approximately vertical orientation (not shown) relative to a ground surface (not shown). This may be advantageous before and/or during connection to a tile transporter for transport, or between installation operations.
t3): as shown, the at least two scoring wheels 220 of the second tile fitter 1200 are arranged to be easily removed, for example, by using one or more wing nuts. Optionally, the at least two scoring wheels 220 of the second tile fitter 1200 may be arranged to be easily removed. This may be advantageous when installing, for example, one or more scoring wheels of different diameters, and/or when cleaning.

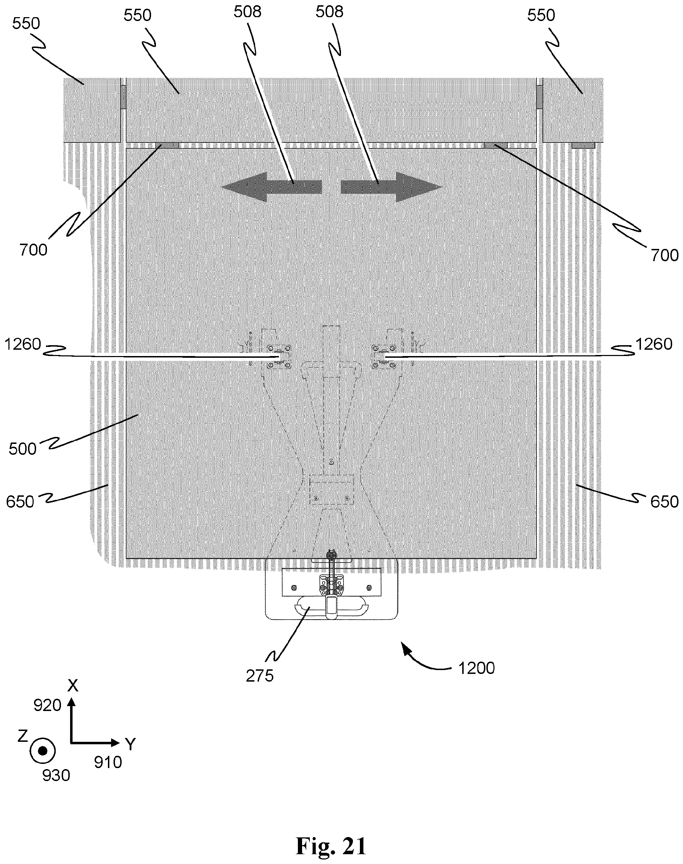

FIG. 21 schematically shows an example of moving a tile 500 lying on a second tile fitter 1200. FIG. 21 shows a top view of a tile 500 during installation of the tile 500 using the second tile fitter 1200. In other words, the tile 500 and the second tile fitter 1200 are viewed from above in a negative Z-axis 930 direction. The moment of installation shown in FIG. 21 is approximately between the moment shown in FIG. 7 and the moment shown in FIG. 8. At the time of the installation as depicted in FIG. 21, at least the following steps have already been performed: u1) the second tile fitter 1200 with the tile-to-be-installed 500 has been moved in a positive direction along the X-axis 920 in the direction of an already fitted tile 550; and u2) the scoring wheels 220 have been moved in the adhesive bed 650. Preferably, the second tile fitter 1200 is arranged so that the small moving wheel 210 does not significantly disturb or deform the adhesive bed 650.

At the time of installation as shown in FIG. 21, the following steps may optionally have already been performed: v1) applying one or more leveling clips 700 to previously fitted tiles 550 to reduce the risk that neighboring tiles 500, 550 are laid at different heights.

It may be advantageous to ensure that the positive X 920 edge of the tile-to-be-installed 500 is correctly positioned relative to a reference position or as shown in FIG. 21, one or more previously fitted tiles 550.

A position of the tile-to-be-installed 500 along the X-axis 920 can be adjusted and/or corrected by moving the tile fitter 200, 1200 along the X-axis 920 in a negative and/or positive direction. Optionally, the tile fitter 200, 1200 may be provided with a grip, such as a grip opening 275, on the negative X-axis 920 side of the tile fitter 200, 1200.

A degree of parallelism and/or perpendicularity can be set and/or corrected by rotating the tile fitter 200, 1200 about the Z-axis 930 in a negative and/or positive direction.

Optionally, a user can use the grip opening 275 to make rotations about the Z axis 930. Optionally, a user may lift the negative X 920 end of the chassis 280 along the positive Z axis 930 away from the adhesive bed 650 to make rotations.

A position of the tile-to-be-installed 500 along the Y-axis 910 can be adjusted and/or corrected by moving the tile fitter 200, 1200 along the Y-axis 910 in negative and/or positive directions by applying a force along the Y-axis 910 during movements along the X-axis 920. Optionally, a user may use the grip opening 275 to apply a force along the Y axis 910. Optionally, a user may lift the negative X 920 end of the chassis 280 along the positive Z axis 930 away from the adhesive bed 650 to apply a force.

A position of the tile-to-be-installed 500 along the Y-axis 910 can also be adjusted and/or corrected by shifting or moving 508 the tile 500 using the two or more spacer wheels 1260. As shown in FIG. 20 and FIG. 21, the two or more spacer wheels 1260 are arranged to support displacements (or movements) of the tile 500 in negative and/or positive directions along the Y-axis 910. This allows, for example, one or more horizontal displacements (movements) and/or one or more rotations of the tile-to-be-installed 500 about the Z-axis 930. If the second tile fitter 1200 includes an optional clamp 230, the clamp must be released in order to move the tile-to-be-installed 500.

After correctly positioning relative to a reference position or one or more previously fitted tiles 550, a user can continue the installation by performing the next step, shown in FIG. 8.

In summary, however, the use of increasingly large tiles creates many handling problems - safe transportation becomes difficult due to their size and weight. Manual installation of these large tiles requires the use of two or more craftsmen, which increases the cost and complexity of installation. A tile fitter is provided comprising a chassis with a first and second end; at least two scoring wheels, attached proximate the first end; one or more spacers, proximate the first end of the chassis, to support the tile-to-be-installed at two or more positions; one or more tile openings proximate the second end at least as large as the thickness of the tile-to-be-installed; and at least one moving wheel, attached proximate the second end; and wherein the tile-to-be-installed includes a first portion extending from the one or more tile openings to the one or more spacers.

Maximum use is made of balance during laying by tilts and weight shifts. The apparent weight of the tile hanging approximately at equilibrium becomes significantly lower for the tile fitter driving through the adhesive bed without significantly disturbing the adhesive bed.

The following embodiment may be advantageous. A tile fitter for manipulating a tile 500 during installation, wherein the tile 500 has a lower surface suitable for remaining in contact with a surface 800 to be covered, the tile fitter 200 comprising: a chassis 280 extending along a longitudinal axis 920 from a first end 280a to a second end 280b, and further extending along a transverse axis 910; at least two scoring wheels 220, rotatably attached to each transverse side of the chassis 280 proximate the first end 280a of the chassis 280; at least two spacers 260, attached to a first surface 280c of the chassis 280 proximate the first end 280a of the chassis 280; a recess 240, attached to a first surface 280c of the chassis 280 proximate the second end 280b of the chassis 280, wherein the recess 240 has an opening at least as large as the thickness of the tile 500 and at least one moving wheel 210, rotatably attached to a second surface 280d of the chassis 280, proximate the second end 280b of the chassis 280; wherein the tile fitter 200 is arranged to receive the tile 500 such that an edge of the tile 500 is received by the recess 240 and the lower surface of the tile 500 is supported by the at least two spacers 260; wherein the tile 500 includes a first portion 501 extending from the recess 240 to the at least two spacers 260; and wherein the dimension along the longitudinal axis 920 of the first portion 501 is between 55% and 65% of the dimension of the tile 500 along the longitudinal axis 920.

The following embodiment may be advantageous. A tile transporter for moving a tile 500 prior to fitting a tile 500 using the tile fitter 200 according to any of claims 1 to 10, wherein the tile 500 has a lower surface, the tile transporter 300 comprising: a chassis 380 extending along a longitudinal axis 930 from a first end 380a to a second end 380b, and further extending along a transverse axis 910; at least two moving wheels 320, rotatably attached to the chassis 380 proximate the first end 380a of the chassis 380; at least two supports 350, attached to the chassis 380, proximate the first end 380a of the chassis 380 and proximate the at least two moving wheels 320; a recess 340, placed on a first surface 380c of the chassis 380, proximate the first end 380a of the chassis 380, wherein the recess 340 has an opening at least as large as the thickness of the tile 500 one or more moving wheels 310a, rotatably attached to the first surface 380c of the chassis 380 proximate the second end 380b, wherein the one or more moving wheels 310a are arranged to support at least a portion of the tile 500; wherein the tile transporter 300 is arranged to receive the tile 500 such that an edge of the tile 500 is received by the recess 340 and the lower surface of the tile 500 is supported by the one or more moving wheels 310a; wherein the at least two supports 350 are arranged to hold the transporter 300 in an approximately vertical orientation between displacements; and wherein the supports 350 are arranged to rotate the transporter 300 about the transverse axis 910 such that the weight of the transporter 300 and the tile 500 is transferred from the supports 350 to the large moving wheels 320 during movement.

**List of reference numbers**

| No. | Definition (EN) |
|---|---|
| 100 | a tile fitting kit |
| 105 | tilt a tile fitting kit down |
| 107 | align small wheels to recess and push down |
| 108 | interlocked for transport |
| 200 | a tile fitter (or fitting device) |
| 205 | move a fitter away from a tile |
| 210 | a small moving wheel |
| 220 | a scoring wheel, for moving and adhesive-scoring |
| 230 | a clamp |
| 235 | tightening a clamp |
| 237 | releasing a clamp |
| 240 | a tile opening |
| 250 | a support |
| 260 | a spacer |
| 270 | an access opening |
| 275 | a grip opening |
| 280 | a chassis |
| 280a | a first end of a chassis |
| 280b | a second end of a chassis |
| 280c | a first surface (top surface) of a chassis |
| 280d | a second surface (bottom surface) of a chassis |
| 300 | a tile transporter (or transporting device) |
| 303 | move a tile in a transporter to a fitting position |
| 305 | move a transporter away from a fitter |
| 306 | move a transporter towards a fitter |
| 307 | tilt a transporter off its support |
| 310ab | a small moving wheel |
| 320 | a large moving wheel |
| 330 | a clamp |
| 340 | a tile opening |
| 350 | a support |
| 370 | an access opening |
| 375 | a grip opening |
| 380 | a chassis |
| 380a | a first end of a chassis |
| 380b | a second end of a chassis |
| 380c | a first surface (tile surface) of a chassis |
| 380d | a second surface of a chassis |
| 390a | a vertical chassis protective part |
| 390b | a horizontal chassis protective part |
| 400 | a table (or trestle) |
| 405 | rotation of a tile off a table (or trestle) |
| 450 | tabletop height |
| 500 | a tile to be fitted |
| 501 | a first portion of tile |
| 502 | a second portion of tile |
| 503 | a tile tilt angle |
| 505 | tilt a tile away from a fitter |
| 507 | tilt a tile towards an adhesive bed |
| 508 | move a tile lying on a fitter |
| 510 | an adhesion surface or lower surface of a tile |
| 550 | a fitted tile |
| 600 | a glue or adhesive |
| 650 | a glue or adhesive bed |
| 700 | a levelling clip |
| 800 | an underlying surface, such as a floor, sub-floor or ground |
| 850 | a ground surface |
| 910 | a first axis (Y) |
| 920 | a second axis (X) |
| 930 | a third axis (Z) |
| 1220a-f | examples of a transverse cross-sections through an adhesive scoring wheel |
| 1221 | a wheel rotation axis |
| 1222 | a wheel thickening or widening |
| 1223 | an average transverse thickness of an adhesive scoring wheel close to the wheel edge |
| 1224 | a wheel edge |
| 1225 | a transverse thickness of a ground contact surface |
| 1227 | a radius of adhesive scoring wheel to a ground contact surface |
| 1200 | a second embodiment of a tile fitter (or fitting device) |
| 1260 | a spacer wheel |
| 1300 | a second embodiment of a tile transporter (or transporting device) |
| 1350 | a support wheel |

## Claims

1. A tile fitter for manipulating a tile-to-be-installed (500) during installation, wherein the tile-to-be-installed (500) has a lower surface (510) suitable for remaining in contact with a surface to be covered (800), the tile fitter (200) comprising:
a chassis (280) extending along a longitudinal axis (920) from a first end (280a) to a second end (280b), and further extending along a transverse axis (910);
at least two scoring wheels (220), rotatably attached to each transverse side of the chassis (280) proximate the first end (280a) of the chassis (280);
one or more spacers (260) attached to a first surface (280c) of the chassis (280), proximate the first end (280a) of the chassis (280), arranged at two or more positions to support the lower surface (510) of the tile-to-be-installed (500);
one or more tile openings (240), attached to a first surface (280c) of the chassis (280), proximate the second end (280b) of the chassis (280), wherein the one or more tile openings (240) are at least as large as the thickness of the tile-to-be-installed (500); and
at least one moving wheel (210), rotatably attached to a second surface (280d) of the chassis (280), proximate the second end (280b) of the chassis (280);
wherein the tile fitter (200) is arranged to receive the tile-to-be-installed (500) such that an edge of the tile-to-be-installed (500) is received by the one or more tile openings (240) and the lower surface (510) of the tile-to-be-installed (500) is supported by the one or more spacers (260); and
wherein the tile-to-be-installed (500) includes a first portion (501) extending from the one or more tile openings (240) to the one or more spacers (260).

2. The tile fitter according to any of the preceding claims, wherein the dimension along the longitudinal axis (920) of the first portion (501) is 50% or more of the dimension of the tile-to-be-installed (500) along the longitudinal axis (920), or between 55% and 65% of the dimension of the tile-to-be-installed (500) along the longitudinal axis (920).

3. The tile fitter according to any of the preceding claims, wherein the at least two scoring wheels (220) have an average transverse thickness (1223), proximate the wheel edge (1224), of 10 mm or less, or 7.5 mm or less, or 5 mm or less, or 2.5 mm or less, or 1 mm or less, or 0.5mm or less.

4. The tile fitter according to any of the preceding claims, wherein the tile fitter (200) includes at least two spacers (260); wherein the lower surface (510) of the tile-to-be-installed (500) is supported by at least two spacers (260); and wherein the tile-to-be-installed (500) includes a first portion (501) extending to the at least two spacers (260).

5. The tile fitter according to any of the preceding claims, wherein the tile fitter (200) further comprises a clamp (230) arranged to hold the tile-to-be-installed in place by exerting a force on the tile-to-be-installed (500) in the direction of the first surface (280c) of the chassis (280).

6. The tile fitter according to any of the preceding claims, wherein the one or more spacers (260) are arranged to provide space between the at least two scoring wheels (220) and the lower surface (510) of the tile-to-be-installed (500) allowing the at least two scoring wheels (220) to rotate freely.

7. The tile fitter according to any of the preceding claims, wherein the one or more tile openings (240) are parts of a recess attached to a first surface (280c) of the chassis (280), proximate the second end (280b) of the chassis (280); wherein the tile fitter (200) is arranged to receive the tile-to-be-installed (500) such that an edge of the tile-to-be-installed (500) is received by the recess; and wherein the tile-to-be-installed (500) includes a first portion (501) extending from the recess.

8. The tile fitter according to any of the preceding claims, wherein the tile fitter (200) is arranged to horizontally manipulate the tile-to-be-installed (500) during installation.

9. A tile transporter for moving a tile (500), wherein the tile (500) to be moved has a lower surface (510), the tile transporter (300) comprising:
a chassis (380) extending along a longitudinal axis (930) from a first end (380a) to a second end (380b), and further extending along a transverse axis (910);
at least two moving wheels (320), rotatably attached to the chassis (380) proximate the first end (380a) of the chassis (380);
one or more supports (350), attached to the chassis (380), proximate the first end (380a) of the chassis (380) and proximate the at least two moving wheels (320), wherein the one or more supports (350) are arranged at two or more positions to hold the transporter (300) in a roughly vertical orientation relative to a ground surface (850);
one or more tile openings (340), positioned on a first surface (380c) of the chassis (380), proximate the first end (380a) of the chassis (380), wherein the one or more tile openings (340) are at least as large as the thickness of the tile-to-be-installed (500);
one or more moving wheels (310a), rotatably attached to the first surface (380c) of the chassis frame (380) proximate the second end (380b), wherein the one or more moving wheels (310a) are arranged to support at least a portion of the tile (500) to be moved;
wherein the tile transporter (300) is arranged to receive the tile (500) to be moved such that an edge of the tile (500) to be moved is received by the one or more tile openings (340) and the lower surface (510) of the tile (500) to be moved is supported by the one or more moving wheels (310a);
wherein the one or more supports (350) are arranged to hold the transporter (300) in an approximately vertical orientation between displacements; and
wherein the one or more supports (350) are arranged to rotate the transporter (300) around the transverse axis (910) such that the weight of the transporter (300) and the tile (500) to be moved is transferred from the one or more supports (350) to the large moving wheels (320) during movement.

10. The tile transporter according to claim 9, wherein the tile transporter (300) comprises at least two supports (350); and wherein the at least two supports (350) are arranged to hold the transporter (300) in a roughly vertical orientation between moves.

11. The tile transporter according to any one of claims 9 to 10, wherein the one or more tile openings (340) are parts of a recess, positioned on a first surface (380c) of the chassis (380), proximate the first end (380a) of the chassis (380); and wherein the tile transporter (300) is arranged to receive the tile (500) to be moved such that an edge of the tile (500) to be moved is received by the recess and the lower surface (510) of the tile (500) to be moved.

12. The tile transporter according to any one of claims 9 to 11, wherein the tile transporter comprises (300):
a clamp (330) attached to the first end (380a) of the chassis (380) opposite the first surface (380c) of the chassis (380), wherein the one or more tile openings (340) are at least partially formed by an edge of the clamp (330) and the first surface (380c) of the chassis (380).

13. The tile fitter according to any one of claims 1 to 8, wherein the chassis (280) of the tile fitter (200) includes an access opening (270) arranged to receive a coupling piece of a tile transporter (300) according to any one of claims 9 to 12.

14. The tile transporter according to any one of claims 9 to 12, wherein the chassis (380) of the tile transporter (300) includes an access opening (370) arranged to receive a coupling piece of a tile fitter (200) according to any one of claims 1 to 8.

15. A tile fitting kit comprising a tile fitter (200) according to any one of claims 1 to 8, and a tile transporter (300) according to any one of claims 9 to 12.
